# EUROPEAN PATENT SPECIFICATION

(11) **EP 3 789 620 B1**
(45) Date of publication and mention of the grant of the patent: **30.08.2023**
(21) Application number: 20194181.2
(22) Date of filing: 02.09.2020
(51) Int. Cl.: F16B 2/10, F16B 5/06, F16B 7/04

(54) **CLAMPING DEVICE**
SPANNVORRICHTUNG
DISPOSITIF DE SERRAGE

(30) Priority: 02.09.2019 GB 201912582
(43) Date of publication of application: 10.03.2021
(73) Proprietor: Purple Line Limited, Ipswich, Suffolk IP9 2BB (GB)
(72) Inventor: HAWKINS, Ben, IPSWICH, IP9 2BB (GB); HARRISON, Jonathan, IPSWICH, IP9 2BB (GB)
(74) Representative: Dummett Copp LLP

(56) References cited:
- EP-A1- 2 551 173
- EP-A1- 3 543 088
- CH-A- 397 336
- Truma: "Mover SE / TE Operation instructions, Installation instructions", , 12 July 2007 (2007-07-12), XP055768705, Retrieved from the Internet: URL:https://www.truma.com/dam/jcr:008ab6c2 -d0a8-48a9-b87c-b10d325fdcee/truma-mover-s e-te-installation-operating-en.pdf [retrieved on 2021-01-26]

## Description

### FIELD OF THE INVENTION

The present invention relates to the field of clamping devices for clamping a cross member to a structural member. The structural member will typically be part of a trailer, and is preferably a chassis member of a caravan. The present invention also relates to a method of securing a cross member to such a structural member using a clamping device.

### BACKGROUND TO THE INVENTION

Trailers are unpowered vehicles designed to be moved by powered vehicles. Examples of trailers include caravans or travel trailers, trailer tents, boat trailers, livestock trailers, plant trailers and so on. Typically, trailers are moved by being towed by a car or van. However, in some situations, it may be necessary to move trailers without the use of a powered vehicle, for example in the confined space of a car park, boat park, campsite etc. Trailers may be moved manually in such situations, but can be heavy and difficult to manoeuvre. Instead, a smaller drive unit may be used as a source of power to move the trailer, such as a motorised jockey wheel, trailer dolly, or motor mover. Motor movers are widely used to move caravans, and may be referred to as caravan movers.

Caravan movers typically comprise a motor which transfers power to the caravan wheels via a roller which contacts the wheel tread, and a means of attaching the mover to the chassis of the caravan.

Moving a caravan, which may be heavy, can require considerable force to be generated by a caravan mover. As such, the mover should be securely fixed to the caravan. A mover may be fitted to drive a wheel independently on each side of the caravan, so that the caravan can be turned as it is moved.

Caravan movers are often secured to the chassis of the caravan, underneath the caravan and in close proximity to a wheel. Typically, a cross member is fitted underneath the caravan. The cross member spans between each side of the caravan close to the wheels and is clamped or bolted to the chassis of the caravan, providing a firm support to which a caravan mover can be attached.

Fitting the cross member to the caravan can be difficult, given the relatively inaccessible nature of the underneath of the caravan and the need for adjustment to accommodate variation in the size and/or shape of the cross member and/or chassis. When fitting the cross member, tightening of bolts or other fixings can be inconvenient, particularly where fixings situated underneath the caravan must be accessed from above. These problems can be exacerbated by the weight and number of parts that may be required.

It is known to provide a clamping device to secure a cross member to a caravan chassis. Known clamping devices have a number of disadvantages, however, such as the inaccessibility of the actuator of the clamping device underneath the caravan and the inability of the clamping device to easily accommodate different cross members. Known clamping devices also do not permit adjustment of the position of the cross member, and therefore the position of the caravan movers relative to the wheels, once the caravan movers have been secured to the cross member and the cross member has been secured to the chassis.

EP 3 543 088 discloses an attachment device for attaching a cross member, which preferably supports at least one manoeuvring drive, at a vehicle. The attachment device has an element that defines an elongated reception space for at least a section of the cross member. The device also has an elongated lever element that is supported at the open top side of the element so as to be pivotable about a pivot axis. The device also includes a clamping device with an end area of the lever element which can be moved in the direction of the element to clamp the chassis of a vehicle, between this end area and a cross member that is received by the basic element and/or the basic element.

It is an aim of the present invention to overcome one or more drawbacks of the prior art whether referred to herein or otherwise.

### SUMMARY OF THE INVENTION

According to a first aspect of the present invention there is provided a clamping device for securing a cross member to a structural member according to claim 1, the device comprising:
- a support arm comprising a channel for receiving said cross member;
- a securing arm including a jaw portion, the securing arm being connected to the support arm by an articulating mechanism;
- a first clamping mechanism arranged to apply a force to clamp at least a part of said structural member between said jaw portion and the support arm, wherein the first clamping mechanism is configured to move the support arm and securing arm between an open configuration, in which said cross member may be engaged with the support arm to be supported by the support arm, and a clamped configuration, in which the jaw portion applies a clamping force to clamp at least a part of said structural member between said jaw portion and the support arm; and
- a retaining member arranged to apply a force to clamp said cross member to the support arm, and characterised in that
   the first clamping mechanism and the jaw portion are provided on the same side of the articulating mechanism and the first clamping mechanism is disposed between a part of the jaw portion and the articulating mechanism, and
   the retaining member is arranged to abut a first surface of the cross member in order to apply a clamping force to said cross member when the support arm and securing arm are in the clamped configuration.

Preferably the articulating mechanism comprises a pivot. In some preferred embodiments the first clamping mechanism is connected to the retaining member such that the first clamping mechanism is configured to simultaneously apply a force to clamp at least a part of said structural member between said jaw portion and the support arm and to move the retaining member to apply a force to clamp said cross member to the support arm. The retaining member may project from the jaw portion, and the jaw portion may further comprise a jaw member, the first clamping mechanism being arranged to apply a force to clamp at least a part of said structural member between the jaw member and the support arm.

Preferably the first clamping mechanism is connected to the retaining member such that the first clamping mechanism is configured to simultaneously apply a force to clamp at least a part of said structural member between said jaw portion and the support arm and to move the retaining member to apply a force directly on to a surface of the cross member to secure/clamp the clamping device to the cross member. The retaining member secured/clamps the cross member between the support arm and the retaining member. Preferably the retaining member abuts/locates adjacent to a first upper surface of the cross member and the support arm abut /locates adjacent to a second lower/opposite surface of the cross member.

In other embodiments the clamping device preferably further comprises a second clamping mechanism, the second clamping mechanism being independent of the first clamping mechanism and being arranged to move the retaining member to apply said force (preferably directly) to said cross member.

In yet further embodiments the clamping device further comprises a second clamping mechanism, the second clamping mechanism being independent of the first clamping mechanism and being arranged to apply an additional force to said structural member. In these embodiments the second clamping mechanism may comprise a clamping member configured to indent a part of the structural member. The support arm is preferably configured to support the weight of the cross member before the first clamping mechanism is actuated.

In some embodiments the clamping device comprises a first actuator operable to drive the first clamping mechanism and a second actuator operable to drive the second clamping mechanism. In other embodiments the clamping device may comprise a single actuator operable to drive both the first and second clamping mechanisms.

The first clamping mechanism is disposed between a part of the jaw portion and the articulating mechanism/pivot. In particular the first clamping mechanism is preferably arranged such that a force applied to at least one of the support arm and the securing arm by the first clamping mechanism is applied between the jaws portion and the articulating mechanism/pivot.

In preferred embodiments the articulating mechanism/pivot is disposed proximate a first end of the support arm. More preferably a first end of the clamping device is defined by first ends of the support arm and securing arm, and the articulating mechanism/pivot is disposed proximate the first end of the clamping device.

In preferred embodiments the jaw portion is disposed at a second end of the securing arm.

In preferred embodiments the first clamping mechanism comprises a clamping member engaged with the support arm and the securing arm. The clamping member is preferably a part of a bolt. Preferably the bolt extends through a part of the support arm and engages with a threaded hole in the securing arm. In some embodiments the first clamping mechanism comprises two clamping members. The clamping members may be on opposite sides of the clamping device.

An actuating member of the first clamping mechanism is preferably attached to the clamping member. The actuating member may be integral with the clamping member. In preferred embodiments, in which the clamping member is a shaft or shank of a bolt, the actuating member is a head of the bolt.

In preferred embodiments the second clamping mechanism comprises a clamping member configured to contact said cross member. An actuating member is preferably provided to drive said clamping member. The actuating member is preferably operable to move the clamping member with respect to the securing arm. The clamping member of the second clamping mechanism may be engaged with a part of the first clamping mechanism.

In some embodiments the clamping member is a clamping plate arranged to apply a force to said cross member. In preferred embodiments a pair of actuating members is configured to apply a force to ends of the clamping plate. In embodiments in which the first clamping mechanism comprises bolts, the clamping plate is preferably engaged with the bolts. In particular the clamping plate may include a hole through which the shank of each bolt extends. An actuating member is preferably configured to move the clamping plate with respect to the bolts. The actuating member may be in the form of a threaded nut engaged with each of the bolts.

In other embodiments the clamping member of the second clamping mechanism comprises a threaded shaft or shank of a bolt, and the actuating member of the second clamping mechanism preferably comprises a head of the bolt. The second clamping mechanism may comprise two bolts.

The second clamping mechanism may comprise an auxiliary clamping member which is arranged to extend between the securing arm and the structural member. Preferably the auxiliary clamping member projects from the securing arm towards the structural member. Preferably the auxiliary clamping member is arranged to be moved outwardly from the securing arm towards the structural member until a tip of the auxiliary clamping member abuts and/engages the structural member. The tip of the auxiliary clamping member may (directly) grip a surface of the structural member.

Preferably the support arm comprises a single profiled or shaped planar component. The support arm (or at least the structure/shape/profile of the support arm) may be formed through deformation/bending of a single planar sheet and preferably any holes/apertures are formed through the single sheet.

Preferably the securing arm comprises a single profiled or shaped planar component. The securing arm (or at least the structure/shape/profile of the securing arm) may be formed through deformation/bending of a single planar sheet and preferably any holes/apertures are formed through the single sheet.

According to a second aspect of the present invention there is provided an assembly comprising a clamping device, a cross member, and a structural member, wherein the clamping device is in accordance with the first aspect of the present invention.

Preferably the articulating mechanism comprises a pivot.

The support arm comprises a channel in which a part of the cross member is located. Preferably the support arm is elongate and the channel extends parallel to an axis of the support arm.

In preferred embodiments the cross member is supported by the support arm such that the cross member extends in a direction substantially perpendicular to the structural member.

According to a third aspect of the present invention there is provided a method of securing a cross member to a structural member using a clamping device according to the first aspect of the invention, according to claim 13, the method comprising:
- supporting a cross member with the support arm;
- operating the first clamping mechanism to clamp the structural member between the jaw portions; and characterised by
- moving the retaining member to clamp the cross member to the support arm.

In some embodiments the method comprises operating a first actuator to drive the first clamping mechanism, and operating a second actuator to drive a second clamping mechanism. In other embodiments the method comprises operating a single actuator to drive both the first and second clamping mechanisms.

### BRIEF DESCRIPTION OF THE DRAWINGS

The invention will now be further described by way of example only and with reference to the accompanying drawings, in which:
Figure 1 is a perspective view of a clamping device according to a first preferred embodiment of the present invention in an open configuration;
Figure 2 is a perspective view of the clamping device of Figure 1 in a clamped or closed configuration;
Figure 3 is an exploded diagram of the clamping device of Figure 1;
Figure 4 shows the clamping device of Figure 1 in the open configuration in use to secure or clamp together a structural member and a cross member;
Figure 5 shows the clamping device of Figure 1 in the clamped configuration securing or clamping together a structural member and a cross member;
Figure 6 is a perspective view of a clamping device according to a second preferred embodiment of the present invention in an open configuration;
Figure 7 is a perspective view of the clamping device of Figure 6 in a clamped or closed configuration;
Figure 8 is an exploded diagram of the clamping device of Figure 6;
Figure 9 shows the clamping device of Figure 6 in the open configuration in use to secure or clamp together a structural member and a cross member;
Figure 10 shows the clamping device of Figure 6 in the clamped configuration securing or clamping together a structural member and a cross member;
Figure 11 is a perspective view of a clamping device according to a third preferred embodiment of the present invention in an open configuration;
Figure 12 is a side view of the clamping device of Figure 11 in the open configuration;
Figure 13 is an end view of the clamping device of Figure 11 in the open configuration;
Figure 14 is a top view of the clamping device of Figure 11 in the open configuration;
Figure 15 shows the clamping device of Figure 11 in the open configuration and in use to secure or clamp together a structural member and a cross member;
Figure 16 is a further view of the clamping device of Figure 11 in the open configuration and in use to secure or clamp together a structural member and a cross member;
Figure 17 is a perspective view of the clamping device of Figure 11 in a clamped configuration;
Figure 18 is a side view of the clamping device of Figure 17 in the clamped configuration;
Figure 19 is an end view of the clamping device of Figure 17 in the clamped configuration;
Figure 20 is a top view of the clamping device of Figure 17 in the clamped configuration;
Figure 21 shows the clamping device of Figure 17 in the clamped configuration and in use to secure or clamp together a structural member and a cross member;
Figure 22 is a further view of the clamping device of Figure 17 in the clamped configuration and in use to secure or clamp together a structural member and a cross member;
Figure 23 is a perspective view of a clamping device according to a fourth preferred embodiment of the present invention in an open configuration;
Figure 24 is a further view of the clamping device of Figure 23 in the open configuration and in use to secure or clamp together a structural member and a cross member;
Figure 25 is a further view of the clamping device of Figure 23 in the clamped configuration and in use to secure or clamp together a structural member and a cross member;
Figure 26 shows the clamping device of Figure 23 in the open configuration and in use to secure or clamp together a structural member and a cross member; and
Figure 27 shows the clamping device of Figure 23 in the clamped configuration and in use to secure or clamp together a structural member and a cross member.

### DESCRIPTION OF THE EMBODIMENTS

The present invention provides a clamping device for securing or clamping a cross member to a structural member. The structural member may be part of a vehicle. The structural member may be a chassis member of a trailer. Specifically, the structural member may be a chassis member of a caravan.

The clamping device comprises a securing arm, a support arm, a first clamping mechanism, and a retaining member.

The securing arm is connected by an articulating mechanism in the form of a pivot to the support arm, such that the securing arm can pivot with respect to the support arm. The securing arm includes a jaw portion. The first clamping mechanism is arranged to move the securing arm with respect to the support arm about the pivot, such that, in use, a part of the structural member is clamped between a part of the jaw portion of the securing arm and the support arm. The retaining member is arranged to clamp the cross member to the support arm.

In use, to secure the cross member to the structural member, the first clamping mechanism is operated to move the securing arm with respect to the support arm, such that the structural member is clamped between a part of the jaw portion of the securing arm and the support arm. The cross member is supported by the support arm. Movement of the retaining member clamps the cross member to the support arm. In this way, both the structural member and the cross member are clamped to the support arm and thus the clamping device secures the cross member to the structural member. The cross member may be supported by the support arm before or after the clamping device is clamped to the structural member by the first clamping mechanism.

Advantageously, in some embodiments, the first clamping mechanism and the retaining member are independently operable. In particular, this means that the cross member may be moveable with respect to the support arm before the retaining member has been moved into a clamping position, but after the clamping device has been secured to the structural member. In this way, the position of the cross member can be adjusted with respect to the structural member after the clamping device has been clamped to the structural member.

In other embodiments the clamping device may be engageable with the structural member before actuation of the first clamping mechanism and the cross member may be supported by the support arm in such a way that the position of both the cross member and the structural member with respect to the clamping device may be adjusted. The first clamping mechanism and the retaining member may then be operable in a single action to simultaneously clamp the structural member and the cross member.

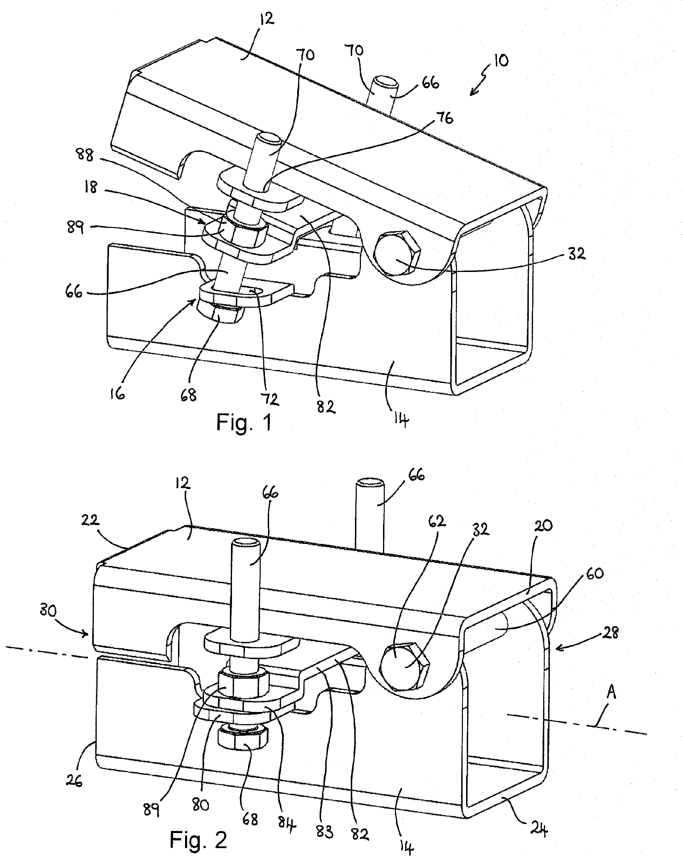

A first embodiment of a clamping device 10 will now be described in more detail, with reference to Figures 1 to 5.

The clamping device 10 comprises a securing arm 12, a support arm 14, and first and second clamping mechanisms 16, 18. The securing arm 12 is elongate and extends between a first end 20 and a second end 22. The support arm 14 is elongate and extends between a first end 24 and second end 26. In this embodiment the first end 20 of the securing arm 12 is aligned with the first end 24 of the support arm 14 to form a first end 28 of the clamping device 10. Similarly, the second end 22 of the securing arm 12 is aligned with the second end 26 of the support arm 14 to form a second end 30 of the clamping device 10. A long axis A extends between the first and second ends 28, 30 of the clamping device 10.

The securing arm 12 is connected to the support arm 14 by a pivot 32 such that the securing arm 12 can pivot with respect to the support arm 14. In this embodiment the pivot 32 is disposed proximate the first end 28 of the clamping device 10.

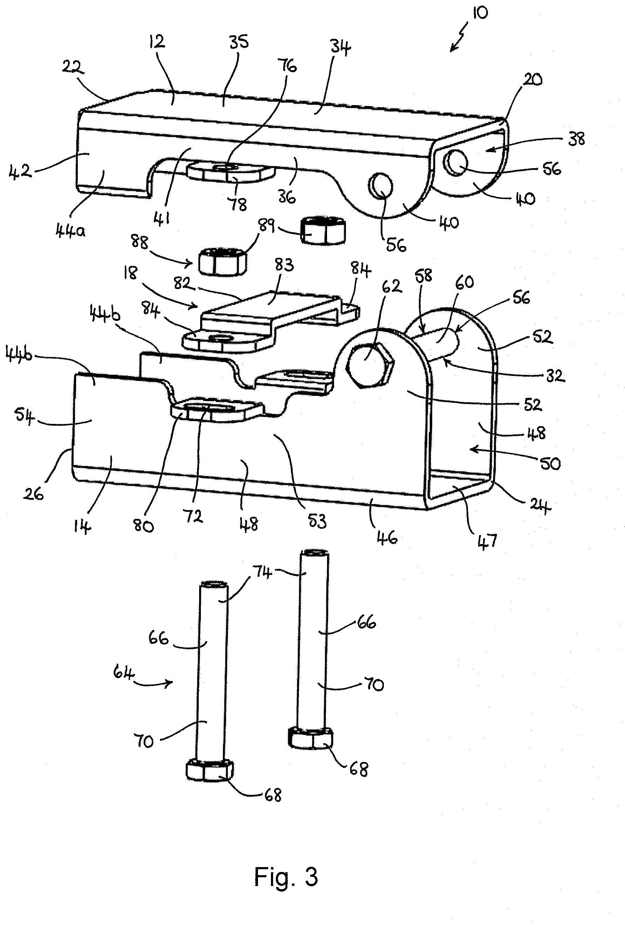

The securing arm 12 comprises a channel member 34 having a U-shaped cross-section, as shown most clearly in Figure 3. The channel member 34 comprises a top plate 35 and side walls 36. The side walls 36 extend from long edges of the top plate 35 in a direction substantially perpendicular to a plane of the top plate 35. A channel 38 is therefore defined between the side walls 36. The channel 38 extends parallel to the axis A of the clamping device 10. The side walls 36 extend towards the support arm 14. At the first end 20 of the securing arm 12 a first end region 40 of each side wall 36 extends further from the top plate 35 than a central region 41 of the side wall 36. At the second end 22 of the securing arm 12 a second end region 42 of each side wall 36 extends further from the top plate 35 than the central region 41. The second end regions 42 provide upper jaw portions 44a. An end wall (not shown) extends from a short edge of the top plate 35 at the second end 22 of the securing arm 12. The end wall extends in the same direction as the side walls 36.

The support arm 14 comprises a channel member 46 having a U-shaped cross-section. The channel member 46 comprises a bottom plate 47 and side walls 48. The side walls 48 extend from long edges of the bottom plate 47 in a direction substantially perpendicular to a plane of the bottom plate 47. A support channel 50 is therefore defined between the side walls 48. The side walls 48 extend towards the securing arm 12. At the first end 24 of the support arm 14 a first end region 52 of each side wall 48 extends further from the bottom plate 47 than a central region 53 of the side wall 48. At the second end 26 of the support arm 14 a second end region 54 of each side wall 48 extends further from the bottom plate 47 than the central region 53. The second end regions 54 provide lower jaw portions 44b.

In this first embodiment, the width of the top plate 35 is greater than the width of the bottom plate 47 such that the side walls 36 of the securing arm 12 are further apart than the side walls 48 of the support arm 14. The first end regions 40 of the side walls 36 of the securing arm 12 overlap or lie outside the first end regions 52 of the side walls 48 of the support arm 14. Each of the first end regions 40, 52 includes a pivot aperture 56. The pivot apertures 56 in the first end regions 40, 52 are aligned.

A pivot pin 58 comprises a shaft 60 and first and second heads 62 at each end of the shaft 60 (only one head is shown in the drawings). The shaft 60 extends through the pivot apertures 56 in the overlapping first end regions 40, 52 of the securing arm 12 and the support arm 14 from a first side of the clamping device 10 to a second side of the clamping device 10. In this way, the shaft 60 of the pin 58 provides a pivot spindle about which the securing arm 12 and support arm 14 can rotate relative to one another. The first and second heads 62 secure the pin 58 through the apertures 56.

In other embodiments, the pivot pin may be of any suitable configuration, such as a bolt or split pin. In some embodiments the clamping device may comprise a pair of pivot pins, bolts or rivets, each one of the pins, bolts or rivets extending through the two pivot apertures on one side of the clamping device.

The first clamping mechanism 16 is arranged to move the securing arm 12 and the support arm 14 about the pivot 32 such that the upper and lower jaw portions 44a, 44b move towards each other into a clamped configuration, or away from each other into an open configuration. The clamped configuration is shown in Figure 2 and the open configuration is shown in Figure 1. The first clamping mechanism 16 is disposed between the first and second ends 28, 30 of the clamping device 10. In particular, the first clamping mechanism 16 is disposed between the pivot 32 and the jaw portions 44a, 44b.

The first clamping mechanism 16 includes a pair of actuating members 64. Each actuating member 64 comprises a clamping bolt 66. As shown most clearly in Figure 1, first and second clamping bolts 66 are mounted on opposite first and second sides of the clamping device 10. Each clamping bolt 66 comprises a head 68 and a shank 70. Each clamping bolt 66 is engaged with both a part of the support arm 14 and a part of the securing arm 12. The length of each bolt 66 is such that the shank 70 extends between the support arm 14 and the securing arm 12 in both the clamped and open configurations. In this embodiment the shank 70 passes through a hole 72 in a part of the support arm 14. At least a distal end region 74 of the shank 70 is externally threaded and engages with a threaded hole 76 in a part of the securing arm 12.

In this embodiment the clamping bolts 66 engage with lugs 78, 80 provided on the securing arm 12 and the support arm 14. As shown in Figure 3, a lower lug 80 is provided on each side of the support arm 14. Each lower lug 80 extends away from the side wall 48 on each side of the support arm 14. Each lower lug 80 includes the hole 72 sized to receive the shank 70 of a corresponding clamping bolt 66. The hole 72 is sized such that there is clearance between the shank 70 and the hole 72. The hole 72 has a diameter smaller than the head 68 of the bolt 66 such that at least a part of the head 68 abuts a lower surface of the lower lug 80. An upper lug 78 is provided on each side of the securing arm 12. Each upper lug 78 extends away from the side wall 36 on each side of the securing arm 12. Each upper lug 78 includes the threaded hole 76 arranged to receive the threaded region 74 of the shank 70 of the corresponding clamping bolt 66.

In use, rotation of the clamping bolts 66 in a first direction causes the upper lugs 78 of the securing arm 12 to move along the threaded region 74 towards the head 68 of the bolt 66 such that the jaw portions 44a, 44b of the securing arm 12 and support arm 14 move in a direction towards each other into the clamped configuration. Similarly, rotation of the clamping bolts 66 in a second, opposite direction, causes the upper lugs 78 of the securing arm 12 to move along the threaded region 74 away from the head 68 of the bolt 66 such that the jaw portions 44a, 44b of the securing arm 12 and support arm 14 move in a direction away from each other into the open configuration.

When the clamping device 10 is moved between the clamped and open configurations, an angle between the securing arm 12 and the support arm 14 changes. Each clamping bolt 66 remains substantially perpendicular to the securing arm 12 due to the engagement of the threaded region 74 of the shank 70 with the threaded hole 76 in the upper lug 78. Accordingly, an angle between the shank 70 and the lower lug 80 changes and the head 68 of the clamping bolt 66 moves in an arc with respect to the lower lug 80. To accommodate this movement, the hole 72 in each lower lug 80 is elongate in a direction substantially parallel to the long axis A.

Although in this embodiment the actuating members 64 have been described such that the head 68 of each bolt 66 is engaged with the support arm 14 and the threaded distal end region 74 of each bolt 66 is engaged with the securing arm 12, it will be appreciated that in other embodiments the actuating members 64 may be arranged such that the head 68 of each bolt 66 is engaged with the securing arm 12 and the threaded distal end region 74 of each bolt 66 is engaged with the support arm 14.

It is envisaged that this clamping device 10 will be used to support a cross member 2 on the underside of a part of a chassis. In particular the cross member 2 may be used to support one or more caravan movers on the underside of a caravan chassis proximate the wheels of the caravan. An advantage of the described configuration is, therefore, that the bolt heads 68 face downwards, away from the chassis, which improves access to the bolt heads 68 in use.

The second clamping mechanism 18 comprises a retaining member or clamping plate 82. The clamping plate 82 is elongate and comprises a clamping portion 83 and two end regions 84. The clamping portion 83 is disposed between the end regions 84. In this embodiment, the clamping portion 83 comprises a U-shaped channel sized to receive a part of the cross member 2. In other embodiments, the clamping portion 83 could comprise a flat or curved plate. The clamping plate 82 is disposed between the securing arm 12 and the support arm 14. The clamping plate 82 extends between first and second sides of the clamping device 10. An aperture 86 is provided in each end region 84. Each aperture 86 is sized to receive the shank 70 of one of the clamping bolts 66, such that there is clearance between the shank 70 and the aperture 86. In this way, the clamping plate 82 extends between the clamping bolts 66 in a direction substantially perpendicular to the long axis A. This arrangement allows the clamping plate 82 to move towards or away from the support member 14 along the shanks 70 of the bolts 66.

The second clamping mechanism 18 includes actuating members 88. In this embodiment each actuating member 88 comprises a clamping nut 89. Each clamping nut 89 is engaged with the threaded region 74 of the shank 70 of each clamping bolt 66. Each clamping nut 89 is disposed between the upper lug 78 and the clamping plate 82. Importantly, the clamping nuts 89 cannot fit through the apertures 86 in the clamping plate 82 and abut an upper surface of the clamping plate 82. The position of each nut 89 on the respective clamping bolt 66 is adjusted by rotation of the nut 89 about the threaded region 74. The clamping nuts 89 are, therefore, arranged to adjust the position of the clamping plate 82 with respect to the clamping bolts 66 by applying a force to the clamping plate 82 upon rotation of the nuts 89.

In use, the cross member 2 is located between a part of the support arm 14 and the clamping plate 82. Rotation of the clamping nuts 89 in a first direction with respect to the clamping bolts 66 moves the clamping nuts 89 towards the support arm 14. This causes the clamping nuts 89 to apply a force to the clamping plate 82 to move the clamping plate 82 in a direction towards the support arm 14. In this way, the clamping plate 82 can be driven towards the support arm 14 to retain or clamp the cross member 2 between the clamping plate 82 and the support arm 14. Rotation of the clamping nuts 89 in a second direction with respect to the clamping bolts 66 moves the clamping nuts 89 away from the support arm 14 and reduces or removes the force applied to the cross member 2 by the clamping plate 82.

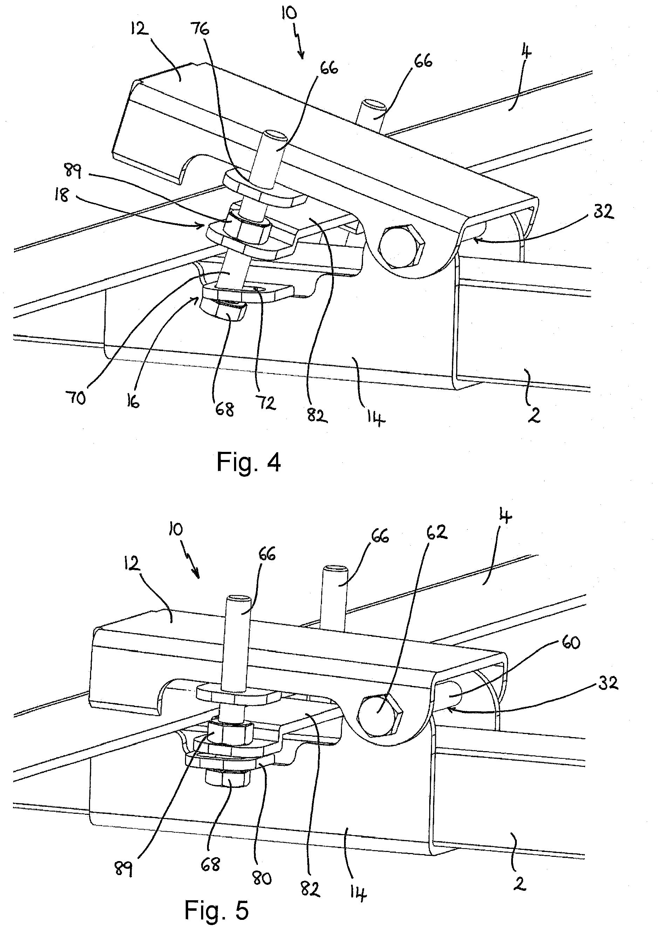

In use, the clamping device 10 is oriented with the securing arm 12 disposed above the support arm 14. With the clamping device 10 in the open configuration, the jaw portions 44a, 44b are positioned around a part of a structural member 4. The cross member 2 is located between the clamping plate 82 and the support arm 14 such that the cross member 2 is supported by the support arm 14 and retained in the channel by the clamping plate 82. In particular, the cross member 2 is located in the channel 50 of the support arm 14. This arrangement is shown in Figure 4. To secure the clamping device 10, a user operates the actuating members 64 of the first clamping mechanism 16. In particular, the user rotates each of the clamping bolts 66 in the first direction to pivot the securing arm 12 with respect to the support arm 14, bringing the upper and lower jaw portions 44a, 44b towards each other to clamp the structural member 4, as shown in Figure 5. The actuating members 88 of the second clamping mechanism 18 are then operated to clamp the cross member 2 between the clamping plate 82 and a part of the support arm 14. In particular, in this embodiment, a user rotates the clamping nuts 89 in the first direction to cause the clamping plate 82 to apply a clamping force to the cross member 2. It will be appreciated that rotation of the clamping bolts 66 may change the position of the clamping nuts 89 with respect to the clamping plate 82. Therefore, to fully secure the clamping device 10, it is preferable if the first clamping mechanism 16 is operated initially to secure the clamping device 10 to the structural member 4, and the second clamping mechanism 18 is operated subsequently by rotating the clamping nuts 89 to clamp the cross member 2.

When only the first clamping mechanism 16 has been operated to clamp the structural member 4, the clamping device 10 is configured to support the weight of the cross member 2. Before the second clamping mechanism 18 has been operated the cross member 2 is able to slide within the channel 50 of the support arm 14 between the support arm 14 and the clamping plate 82. The positon of the cross member 2 can therefore be adjusted with respect to the structural member 4 before operation of the second clamping mechanism 18 to secure the cross member 2 in place.

A further advantage of the independent operation of the first and second clamping mechanisms 16, 18 is that the second clamping mechanism 18 can be adjusted to accommodate cross members 2 having different dimensions.

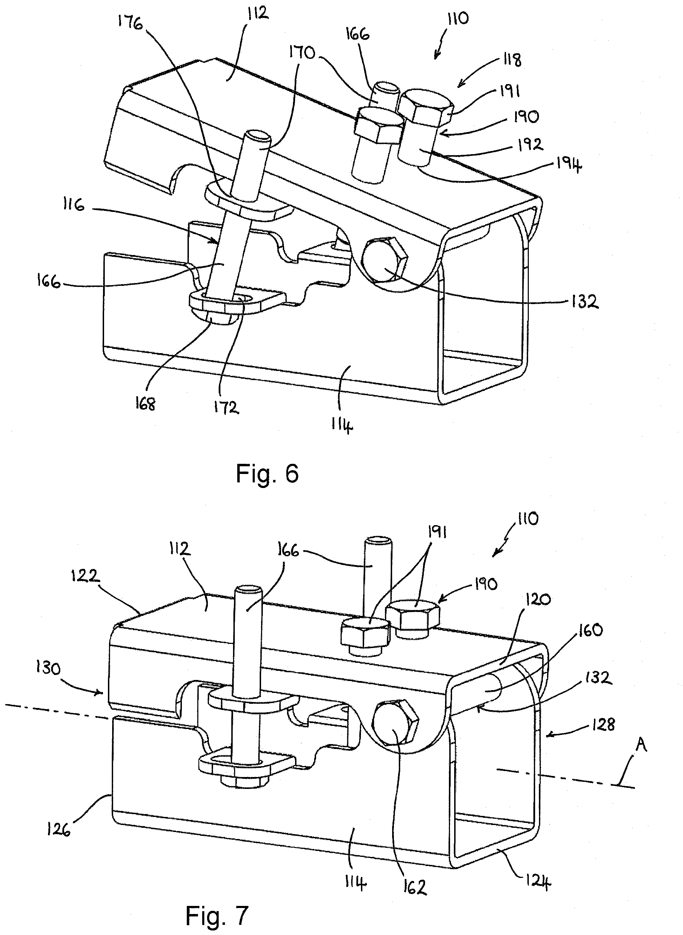

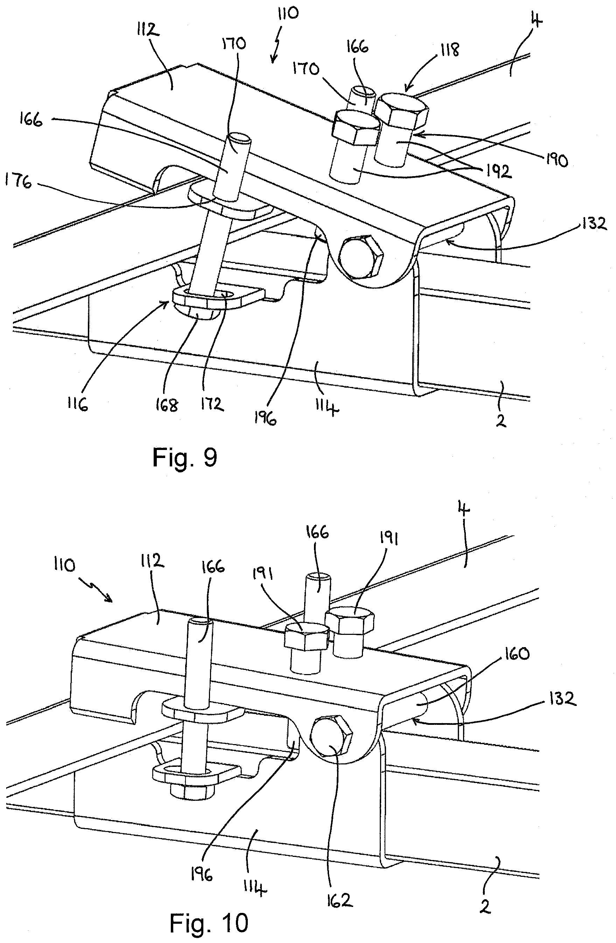

Referring to Figures 6 to 10, a second embodiment of a clamping device 110 will now be described.

The clamping device 110 comprises a securing arm 112, a support arm 114, and first and second clamping mechanisms 116, 118. The securing arm 112, support arm 114 and first clamping mechanism 116 of the second embodiment are similar to those described in relation to the first embodiment. Features of the second embodiment corresponding to features of the first embodiment are denoted by reference numerals incremented by 100.

The securing arm 112 is elongate and extends between a first end 120 and a second end 122. The support arm 114 is elongate and extends between a first end 124 and a second end 126. In this second embodiment the first end 120 of the securing arm 112 is aligned with the first end 124 of the support arm 114 to form a first end 128 of the clamping device 110. Similarly, the second end 122 of the securing arm 112 is aligned with the second end 126 of the support arm 114 to form a second end 130 of the clamping device 110. A long axis A extends between the first and second ends 128, 130 of the clamping device 110. The securing arm 112 is connected to the support arm 114 by a pivot 132 such that the securing arm 112 can pivot with respect to the support arm 114. In this embodiment the pivot 132 is disposed proximate the first end 128 of the clamping device 110.

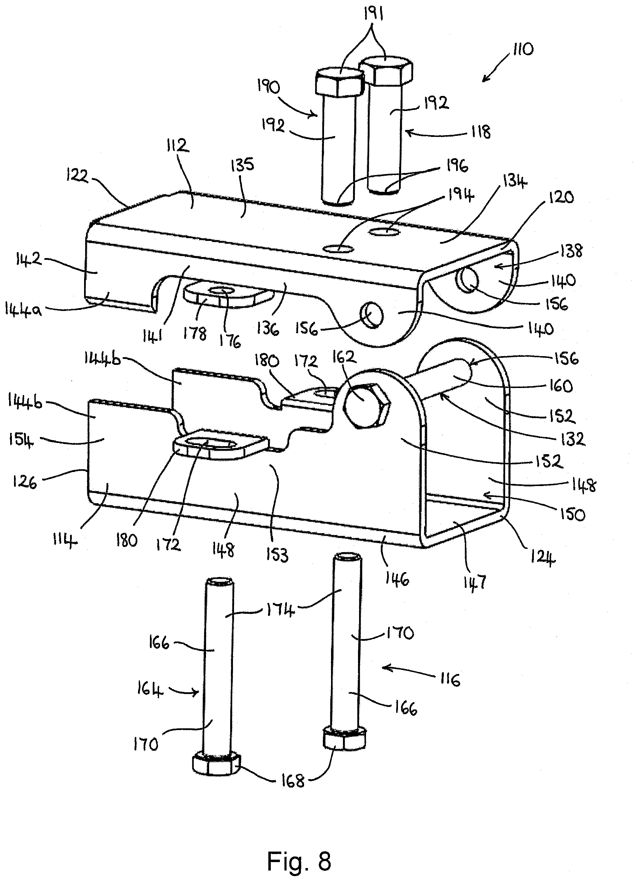

The securing arm 112 comprises a channel member 134 having a U-shaped cross-section, as shown most clearly in Figure 8. The channel member 134 comprises a top plate 135 and side walls 136. The side walls 136 extend from long edges of the top plate 135 in a direction substantially perpendicular to a plane of the top plate 135. A channel 138 is therefore defined between the side walls 136. The channel 138 extends parallel to the axis A of the clamping device 110. The side walls 136 extend towards the support arm 114. At the first end 120 of the securing arm 112 a first end region 140 of each side wall 136 extends further from the top plate 135 than a central region 141 of the side wall 136. At the second end 122 of the securing arm 112 a second end region 142 of each side wall 136 extends further from the top plate 135 than the central region 141. The second end regions 142 provide upper jaw portions 144a. An end wall (not shown) extends from a short edge of the top plate 135 at the second end 122 of the securing arm 112. The end wall extends in the same direction as the side walls 136.

The support arm 114 comprises a channel member 146 having a U-shaped cross-section. The channel member 146 comprises a bottom plate 147 and side walls 148. The side walls 148 extend from long edges of the bottom plate 147 in a direction substantially perpendicular to a plane of the bottom plate 147. A support channel 150 is therefore defined between the side walls 148. The side walls 148 extend towards the securing arm 112. At the first end 124 of the support arm 114 a first end region 152 of each side wall 148 extends further from the bottom plate 147 than a central region 153 of the side wall 148. At the second end 126 of the support arm 114 a second end region 154 of each side wall 148 extends further from the bottom plate 147 than the central region 153. The second end regions 154 provide lower jaw portions 144b.

In this second embodiment, the width of the top plate 135 is greater than the width of the bottom plate 147 such that the side walls 136 of the securing arm 112 are further apart than the side walls 148 of the support arm 114. The first end regions 140 of the side walls 136 of the securing arm 112 overlap or lie outside the first end regions 152 of the side walls 148 of the support arm 114. Each of the first end regions 140, 152 includes a pivot aperture 156. The pivot apertures 156 in the first end regions 140, 152 are aligned.

A pivot pin 158 comprises a shaft 160 and first and second heads 162 at each end of the shaft 160 (only one head is shown in the drawings). The shaft 160 extends through the pivot apertures 156 in the overlapping first end regions 140, 152 of the securing arm 112 and the support arm 114 from a first side of the clamping device 110 to a second side of the clamping device 110. In this way, the shaft 160 of the pin 158 provides a pivot spindle about which the securing arm 112 and support arm 114 can rotate relative to one another. The first and second heads 162 secure the pin 158 through the apertures 156.

The first clamping mechanism 116 is arranged to move the securing arm 112 and the support arm 114 about the pivot 132 such that the upper and lower jaw portions 144a, 144b move towards each other into a clamped configuration, or away from each other into an open configuration. The clamped configuration is shown in Figure 7 and the open configuration is shown in Figure 6. The first clamping mechanism 116 is disposed between the first and second ends 128, 130 of the clamping device 110. In particular, the first clamping mechanism 116 is disposed between the pivot 132 and the jaw portions 144a, 144b.

In this second embodiment the first clamping mechanism 116 includes a pair of actuating members 164. Each actuating member 164 comprises a clamping bolt 166. As shown most clearly in Figure 6, first and second clamping bolts 166 are mounted on opposite first and second sides of the clamping device 110. Each clamping bolt 166 comprises a head 168 and a shank 170. Each clamping bolt 166 is engaged with both a part of the support arm 114 and a part of the securing arm 112. The length of each bolt 166 is such that the shank 170 extends between the support arm 114 and the securing arm 112 in both the clamped and open configurations. In this embodiment the shank 170 passes through a hole 172 in a part of the support arm 114. At least a distal end region 174 of the shank 170 is externally threaded and engages with a threaded hole 176 in a part of the securing arm 112.

The clamping bolts 166 engage with lugs 178, 180 provided on the securing arm 112 and the support arm 114. As shown in Figure 8, a lower lug 180 is provided on each side of the support arm 114. Each lower lug 180 extends away from the side wall 148 on each side of the support arm 114. Each lower lug 180 includes the hole 172 sized to receive the shank 170 of a corresponding clamping bolt 166. The hole 172 is sized such that there is clearance between the shank 170 and the hole 172. The hole 172 has a diameter smaller than the head 168 of the bolt 166 such that at least a part of the head 168 abuts a lower surface of the lower lug 180. An upper lug 178 is provided on each side of the securing arm 112. Each upper lug 178 extends away from the side wall 136 on each side of the securing arm 112. Each upper lug 178 includes the threaded hole 176 arranged to receive the threaded region 174 of the shank 170 of the corresponding clamping bolt 166.

In use, rotation of the clamping bolts 166 in a first direction causes the upper lugs 178 of the securing arm 112 to move along the threaded region 174 towards the head 168 of the bolt 166 such that the jaw portions 144a, 144b of the securing arm 112 and support arm 114 move in a direction towards each other into the clamped configuration. Similarly, rotation of the clamping bolts 166 in a second, opposite direction, causes the upper lugs 178 of the securing arm 112 to move along the threaded region 174 away from the head 168 of the bolt 166 such that the jaw portions 144a, 144b of the securing arm 112 and support arm 114 move in a direction away from each other into the open configuration.

When the clamping device 110 is moved between the clamped and open configurations, an angle between the securing arm 112 and the support arm 114 changes. Each clamping bolt 166 remains substantially perpendicular to the securing arm 112 due to the engagement of the threaded region 174 of the shank 170 with the threaded hole 176 in the upper lug 178. Accordingly, an angle between the shank 170 and the lower lug 180 changes and the head 168 of the clamping bolt 166 moves in an arc. To accommodate this movement, the hole 172 in each lower lug 180 is elongate in a direction substantially parallel to the long axis A.

In this second embodiment, the second clamping mechanism 118 includes a pair of retaining members or clamping members 190. Each clamping member comprises a head 191 and a threaded shank 192. Holes 194 are provided in the securing arm 112 through which the shanks 192 extend. In particular, a pair of holes 194 is provided in the top plate 135 of the securing arm 112. In this embodiment the holes 194 in the top plate 135 are disposed between the pivot 132 and the first clamping mechanism 116. The holes 194 are threaded to engage with the threads of the clamping members 190. The head 191 of each clamping member 190 is disposed on a first, upper side of the securing arm 112 and the shanks 192 extend through the holes 194 in a direction towards the support arm 114. The length of the clamping members 190 is such that, when the clamping device 110 is in the clamped configuration, a distal end 196 of the shank 192 of each clamping member 190, furthest from the head 191, is able to extend into the channel 150 in the support member 114.

In other embodiments, the holes 194 may be disposed in other locations relative to the pivot 132 and the first clamping mechanism 116. The second clamping mechanism 118 may be disposed between the first clamping mechanism 116 and the second end 122 of the securing arm 112. The second clamping mechanism 118 may be disposed between the pivot 132 and the first end 128 of the clamping device 110.

In use, the cross member 2 is located in the channel 150 of the support arm 114. The cross member 2 is located between a part of the support arm 114 and the distal ends 196 of the clamping members 190 such that the cross member 2 is supported by the support arm 114 and retained in the channel 150 by the clamping members 190. Rotation of each clamping member 190 in a first direction with respect to the securing arm 112 causes the clamping member 190 to move through the hole 194 in the securing arm 112 in a direction towards the support arm 114. Each clamping member 190 is rotated until the respective distal end 196 contacts the cross member 2. The clamping members 190 may be further rotated in the first direction to apply a force to the cross member 2 to clamp the cross member 2 to the support arm 114. To release the cross member 2, rotation of each clamping member 190 in a second, opposite direction with respect to the securing arm 112 causes the clamping member 190 to move through the hole 194 in a direction away from the support member 114. It will be appreciated that rotation of the clamping members 190 is effected by applying a force to the head 191 of each of the clamping members 190. The heads 191 are therefore actuating members 188 of the second clamping mechanism 118.

It will be appreciated that in this second embodiment of the clamping device 110, operation of the first clamping mechanism 116 moves the clamping members 190 with respect to the support arm 114, because the clamping members 190 are disposed in the securing arm 112. The clamping action of the clamping members 190 on the cross member 2 can therefore be driven, at least partially, by the first clamping mechanism 116. However, the second clamping mechanism 118 can also be adjusted independently by rotation of the clamping members 190. As described in the first embodiment, independent operation of the first and second clamping mechanisms 116, 118 allows the position of the cross member 2 to be adjusted with respect to the support member 114 while the clamping device 110 is secured to the structural member 4.

In a variant of this second embodiment, the second clamping mechanism may comprise only one clamping member engaged with the securing arm.

In the above-described embodiments, each of the first and second clamping mechanisms included actuating means in the form of an actuating member. In other embodiments the clamping device may include one actuating means or one actuating member that is arranged to drive both the first and second clamping mechanisms.

For example, in a variant of the first embodiment, the clamping plate may be secured to the securing arm in a fixed location with respect to the securing arm. In this arrangement, operation of the first clamping mechanism drives the upper and lower jaw portions towards each other to clamp the structural member and simultaneously drives the clamping plate towards the support arm to clamp the cross member.

Similarly, in a variant of the second embodiment, one or more clamping members may extend from the securing arm, such that distal ends of the clamping members are in fixed position with respect to the securing arm. In this arrangement, operation of the first clamping mechanism drives the upper and lower jaw portions towards each other to clamp the structural member and simultaneously drives the clamping members towards the support arm such that the distal ends apply a force to clamp the cross member. In some embodiments the clamping members of the second clamping mechanism may comprise fixed pins or may be in the form of other projections or protrusions.

In embodiments in which the first and second clamping mechanisms are actuated simultaneously, and cannot be adjusted independently, a degree of tolerance may be provided to allow the clamping device to accommodate cross members having different dimensions. For example, in a variant of the first embodiment, the second clamping mechanism may comprise a spring or other resilient member arranged to bias the clamping plate in a direction towards the support arm. Similarly, in a variant of the second embodiment, the second clamping mechanism may comprise one or more springs or other resilient members arranged to bias the clamping members in a direction towards the support arm. Alternatively, the clamping members of the second clamping mechanism may be in the form of a spring having appropriate stiffness.

In the first and second embodiments described above the first clamping mechanism includes a pair of actuating members. In other embodiments the first clamping mechanism may comprise a single actuating member. For example, an actuating arm may extend from one or both sides of the securing arm to a distal end region disposed on a lower side of the support arm opposite the securing arm. The actuating member may be engaged with the distal end region and configured to apply a force to the support arm. Applying a force to the actuating member in a first direction may drive the support arm in a direction towards the securing arm, and applying a force to the actuating member in a second direction may drive the support arm in a direction away from the securing arm. The first clamping mechanism may, therefore, operate in a similar manner to a G-clamp.

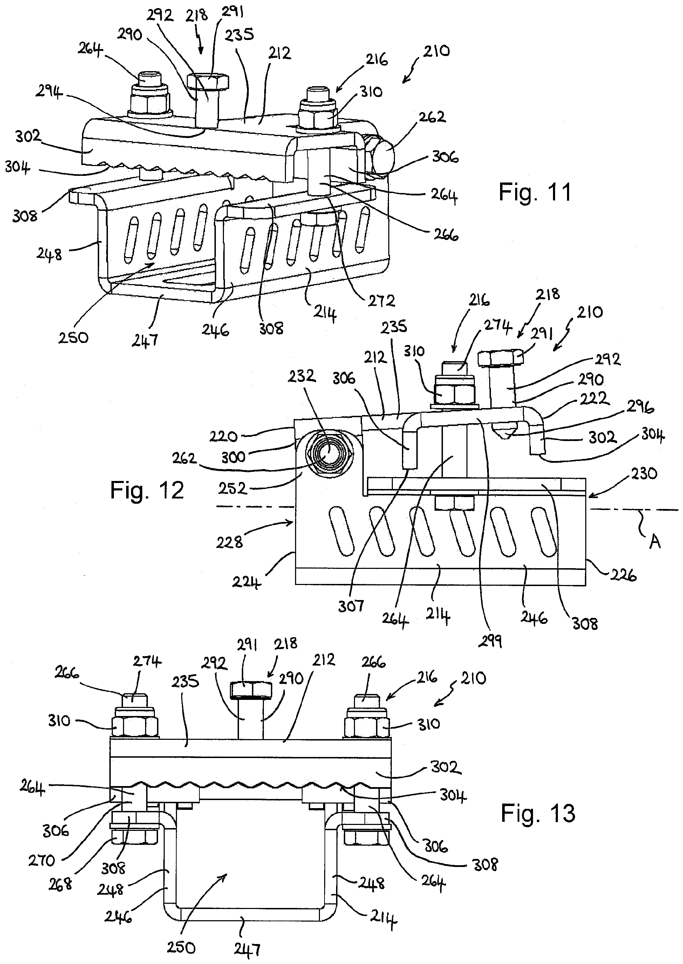

A third embodiment of a clamping device 210 according to the present invention is shown in Figures 11 to 22.

The clamping device 210 comprises a securing arm 212, a support arm 214, and a first clamping mechanism 216. The securing arm 212 is elongate and extends between a first end 220 and a second end 222. The support arm 214 is elongate and extends between a first end 224 and second end 226. In this embodiment the first end 220 of the securing arm 212 is substantially aligned with the first end 224 of the support arm 214 at a first end 228 of the clamping device 210. A second end 230 of the clamping device 210 is defined by the second end 226 of the support arm 214. A long axis A extends between the first and second ends 228, 230 of the clamping device 210.

In this embodiment a length of the securing arm 212, between first and second ends 220, 222, is smaller than a length of the support arm 214 between first and second ends 224, 226.

The securing arm 212 is connected to the support arm 214 by a pivot 232 such that the securing arm 212 can pivot with respect to the support arm 214. In this embodiment the pivot 232 is disposed proximate the first end 228 of the clamping device 210.

The securing arm 212 comprises a top plate 235 that extends between the first and second ends 220, 222. In this example the top plate is substantially T-shaped such that a width of the top plate, in a direction perpendicular to the axis A, is greater at the second end 222 of the top plate 235 than at the first end 220. In particular, a stem portion 298 of the top plate 235, having a first smaller width, is disposed at the first end 220 of the top plate 235, and a jaw portion 244 of the top plate 235, having a second larger width, is disposed at the second end 222 of the top plate 235. Side edges of each of the stem portion 298 and jaw portion 244 of the top plate 235 extend in directions parallel to the axis A. End edges of each of the stem portion 298 and jaw portion 244 of the top plate 235 extend in directions perpendicular to the axis A.

A pair of tabs or side wall regions 300 extend from the side edges of the stem portion 298 of the top plate 235 at the first end 220 of the securing arm 212. The tabs 300 extend from the top plate 235 in a direction substantially perpendicular to a plane of the top plate 235.

An end wall or jaw member 302 extends from the end edge of the jaw portion 244 of the top plate 235 at the second end 222 of the securing arm 212. The jaw member 302 extends from the top plate 235 in a direction substantially perpendicular to a plane of the top plate 235 and in the same direction as the tabs 300. The jaw member 302 terminates at a clamping edge 304. In preferred embodiments the jaw member 302 has an undulating or serrated clamping edge 304. This reduces the risk of slippage when the jaw member 302 is in contact with and clamping a structural member 4, as described further below.

A pair of retaining members 306 extend from the top plate 235 in a direction substantially perpendicular to a plane of the top plate 235 and in the same direction as the tabs 300. In this embodiment the retaining members extend from transverse edges of the jaw portion 244 at the intersection of the stem portion 298 and the jaw portion 244. In other embodiments the securing arm 212 may include a single retaining member 306. The retaining member or retaining members 306 are preferably disposed between the jaw member 302 and the tabs 300 of the securing arm 212 in a direction parallel to the axis A. In this way the retaining members 306 are disposed between the jaw member 302 and the pivot 232.

As shown most clearly in Figure 12, in this embodiment a depth or height of each of the retaining members 306 (i.e. a distance between the top plate 235 and a free edge 307 of the retaining member 306 in a direction substantially perpendicular to the plane of the top plate 235) is greater than a depth or height of the jaw member 302 (i.e. a distance between the top plate 235 and the clamping edge 304 of the jaw member 302 in a direction substantially perpendicular to the plane of the top plate 235).

The support arm 214 comprises a channel member 246 having a U-shaped cross-section. As shown most clearly in Figure 13, the channel member 246 comprises a bottom plate 247 and side walls 248. The side walls 248 extend from long edges of the bottom plate 247 in a direction substantially perpendicular to a plane of the bottom plate 247. A support channel 250 is therefore defined between the side walls 248. The side walls 248 extend in a direction towards the securing arm 212. At the first end 224 of the support arm 214 a first end region 252 of each side wall 248 extends further from the bottom plate 247 than the remainder of the side wall 248 to form a pair of pivot lugs 252.

In this embodiment, a distance between the tabs 300 of the securing arm 212 is smaller than a distance between the pivot lugs 252 of the support arm 214, such that the pivot lugs 252 overlap and lie outside the tabs 300. Each of the tabs 300 and each of the pivot lugs 252 includes a pivot aperture (not shown). The pivot apertures in the tabs 300 and the pivot lugs 252 are aligned.

A pivot pin 258 comprises a shaft 260 and a head 262 at each end of the shaft 260. The shaft 260 extends through the pivot apertures in the overlapping tabs 300 and pivot lugs 252 from a first side of the clamping device 210 to a second side of the clamping device 210. In this way, the shaft 260 of the pin 258 provides a pivot spindle about which the securing arm 212 and support arm 214 can rotate relative to one another. The heads 262 secure the pin 258 through the apertures.

In other embodiments, the pivot pin may be of any suitable configuration, such as a bolt or split pin. In some embodiments the clamping device may comprise a pair of pivot pins, bolts or rivets, each one of the pins, bolts or rivets extending through the two pivot apertures on one side of the clamping device.

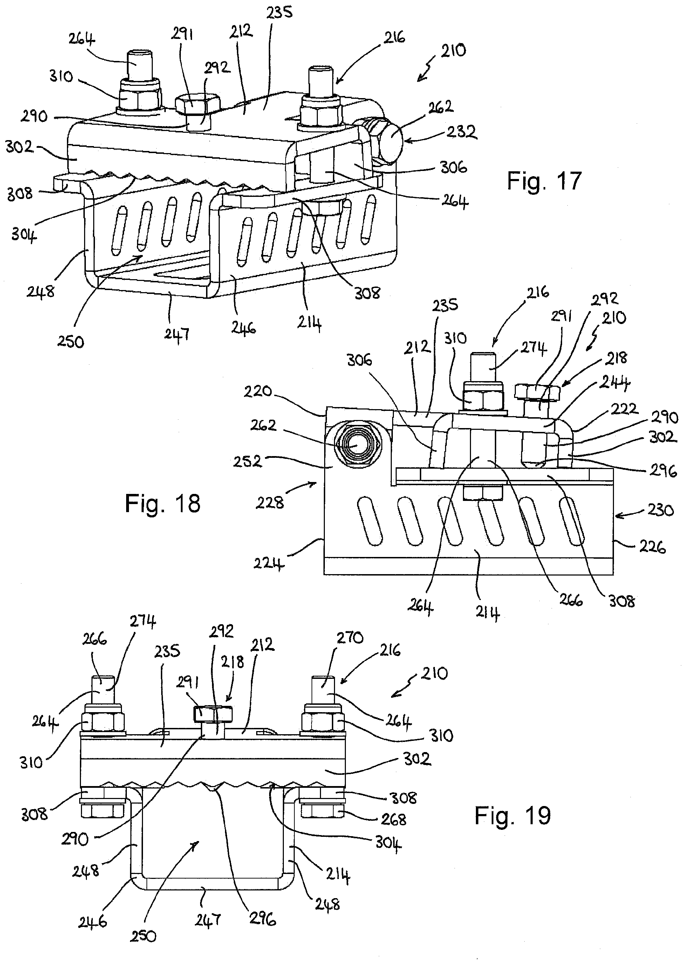

The first clamping mechanism 216 is arranged to move the securing arm 212 and the support arm 214 about the pivot 232 such that the jaw portion 244, and in particular the jaw member 302, of the securing arm 212 moves towards the support arm 214 into a clamped configuration or away from the support arm 214 into an open configuration. The clamped configuration is shown in Figures 17 to 22 and the open configuration is shown in Figure 11 to 16. The first clamping mechanism 216 is disposed between the first and second ends 228, 230 of the clamping device 210. In particular, the first clamping mechanism 216 is disposed between the pivot 232 and the jaw member 302.

The first clamping mechanism 216 includes a pair of actuating members 264. Each actuating member 264 comprises a clamping bolt 266. As shown most clearly in Figure 13, first and second clamping bolts 266 are mounted on opposite first and second sides of the clamping device 210. Each clamping bolt 266 comprises a head 268 and a shank 270. Each clamping bolt 266 is engaged with both a part of the support arm 214 and a part of the securing arm 212. The length of each bolt 266 is such that the shank 270 extends between the support arm 214 and the securing arm 212 in both the clamped and open configurations. In this embodiment each shank 270 passes through a respective first hole 272 in a part of the support arm 214 and a respective second hole in the securing arm 212.

In this embodiment a pair of second holes is provided in the jaw portion 244 of the securing arm 212. The support arm 214 comprises a flange 308 that extends outwardly from an edge of each of the side walls 248 of the channel member 246 furthest from the bottom plate 247. Each one of a pair of first holes 272 is provided in a respective one of the flanges 308. Each of the holes 272 is sized such that there is clearance between the shank 270 and the hole 272.

The clamping bolts 266 are engaged with the securing arm 212 and support arm 214 such that the head 268 of each of the clamping bolts 266 is located on an underside of the flange 308 furthest from the securing arm 212. At least a distal end region 274 of each shank 270 is externally threaded and engages with a threaded nut 310 disposed on an upper side of the securing arm 212 furthest from the support arm 214. In this way a part of the support arm 214 and a part of the securing arm 212 are located between the head 268 of the clamping bolt 266 and the threaded nut 310.

In some embodiments the threaded nut 310 may be secured or attached to the securing arm 212 such that the threaded nut 310 does not move with respect to the securing arm 212.

In use, rotation of the clamping bolts 266 in a first direction causes the threaded nut 310 to move along the threaded region 274 towards the head 268 of the bolt 266 such that the jaw portion 244 of the securing arm 212 moves in a direction towards the support arm 214 into the clamped configuration. Similarly, rotation of the clamping bolts 266 in a second, opposite direction, causes the threaded nut 310 to move along the threaded region 274 away from the head 268 of the bolt 266 such that the jaw portion 244 of the securing arm 212 is able to move in a direction away from the support arm 214 into the open configuration.

When the clamping device 210 is moved between the clamped and open configurations, an angle between the securing arm 212 and the support arm 214 changes. Accordingly, an angle between the shank 270 and one or both of the support arm 214 and securing arm 212 changes. To accommodate this movement, the holes 272 in one of or each of the support arm 214 and the securing arm 212 may be elongate in a direction substantially parallel to the long axis A.

Referring in particular to Figures 12 and 18, it will be appreciated that movement of the jaw portion 244 of the securing arm 212 in a direction towards the support arm 214 moves both the jaw member 302 and the retaining members 306 in directions towards the support arm 214. In the illustrated embodiment, when the clamping device 210 is in the clamped configuration the free edge 307 of each of the retaining members 306 preferably contacts or abuts a surface of a corresponding one of the flanges 308.

Although in this embodiment the actuating members 264 have been described such that the head 268 of each bolt 266 is engaged with the support arm 214 and the threaded nut 310 is associated with the securing arm 212, it will be appreciated that in other embodiments the actuating members 264 may be arranged such that the head 268 of each bolt 266 is engaged with the securing arm 212 and the threaded nut 310 is engaged with the support arm 214.

It is envisaged that this clamping device 210 will be used to support a cross member 2 on the underside of a part of a chassis. In particular the cross member 2 may be used to support one or more caravan movers 6 on the underside of a caravan chassis proximate the wheels of the caravan. An advantage of the described configuration is, therefore, that the bolt heads 268 face downwards, away from the chassis, which improves access to the bolt heads 268 in use.

The clamping device 210 further comprises a second clamping mechanism 218. The second clamping mechanism 218 includes a clamping member 290 (an auxiliary clamping member). The clamping member comprises a head 291 and a threaded shank 292. A hole 294 is provided in the securing arm 212 through which the shank 292 extends. In particular, a hole 294 is provided in the top plate 235 of the securing arm 212. In this embodiment the hole 294 in the top plate 235 is disposed proximate the jaw member 302, and in particular between the first clamping mechanism 216 and the jaw member 302 in a direction parallel to the long axis A. The hole 294 is threaded to engage with the threads of the clamping member 290. The head 291 of the clamping member 290 is disposed on the upper side of the securing arm 212 and the shank 292 extends through the hole 294 in a direction towards the support arm 214. The length of the clamping member 290 is such that, when the clamping device 210 is in the clamped configuration (and no cross member 2 or structural member 4 is located between the support arm 214 and the securing arm 212), a distal end 296 of the shank 292 of the clamping member 290, furthest from the head 291, is able to extend into the channel 250 in the support member 214.

In use, the clamping device 210 is oriented with the securing arm 212 disposed above the support arm 214. With the clamping device 210 in the open configuration, a cross member 2 may be located within the channel 250 of the support arm 214, such that the cross member 2 is supported by the support arm 214. The clamping device 210 is retained on the cross member 2 by the channel member 246 of the support arm 214 and the retaining members 306 which together substantially surround a part of the cross member 2 and prevent the cross member 2 being withdrawn from the channel 250 in a direction transverse or substantially perpendicular to the long axis A. Movement or sliding of the clamping device 210 along the cross member 2 in a direction substantially parallel to long axis A is, however, permitted to allow the position of the clamping device 210 on the cross member 2 to be adjusted.

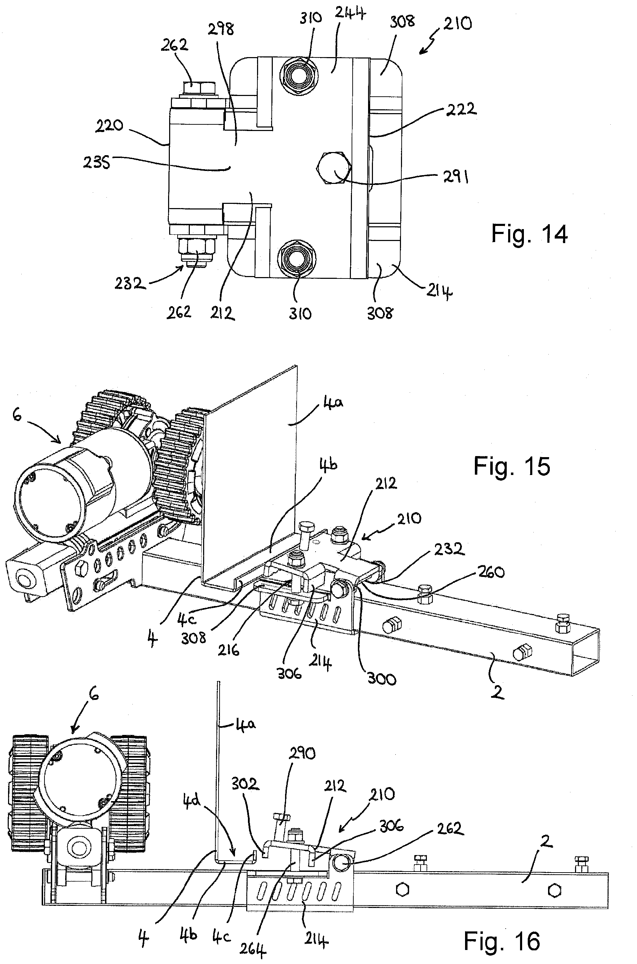

The jaw member 302 of the securing arm 212 may then be engaged with a structural member 4, such as a part of a chassis of a caravan. In preferred embodiments the projecting jaw member 302 of the securing arm 212 is hooked over a part of the structural member 4 such that the clamping device 210 may be suspended from the structural member 4 whilst in the open configuration. As illustrated in Figures 15 and 16, it is envisaged that in preferred embodiments the structural member 4 comprises a side wall panel 4a, a base panel 4b projecting perpendicularly from a lower edge of the side wall panel 4a and a lip 4c projecting upwardly from an opposite edge of the base panel 4b. A shallow structural channel 4d is thereby defined between the lip 4c, the base panel 4b and a lower region of the side wall panel 4a. In use, therefore, the jaw member 302 of the clamping device 210 may be hooked over the lip 4c such that the clamping edge 304 of the jaw member 302 is in contact with a surface of the base panel 4b. With the clamping device 210 engaged with the structural member 4, an axis of the structural channel 4d preferably extends in a direction substantially perpendicular to the long axis A of the clamping device 210.

It will be appreciated that with the cross member 2 supported in the support arm 214 and the securing arm 212 engaged with the structural member 4, as described above, the cross member 2 may be moved with respect to the clamping device 210 in a direction substantially parallel to the axis A, and the clamping device 210 may be moved with respect to the structural member 4 in a direction substantially perpendicular to the axis A. This allows the position of the cross member 2 relative to the structural member 4 to be adjusted in two directions, with the cross member 2 fully supported by the clamping device 210, before the clamping device 210 is clamped to either the cross member 2 or the structural member 4.

In embodiments in which the cross member 2 supports a caravan mover 6, this allows a user to easily position the mover 6 correctly with respect to a wheel connected to the chassis of the caravan before securely fixing the cross member 2 to the chassis.

Once the cross member 2 has been correctly positioned, the clamping device 210 may then be clamped to both the cross member 2 and the structural member 4.

To secure the clamping device 210, a user operates the actuating members 264 of the first clamping mechanism 216. In particular, the user rotates each of the clamping bolts 266 in the first direction to pivot the securing arm 212 with respect to the support arm 214, bringing the jaw portion 244 of the securing arm 212 towards the support arm 214.

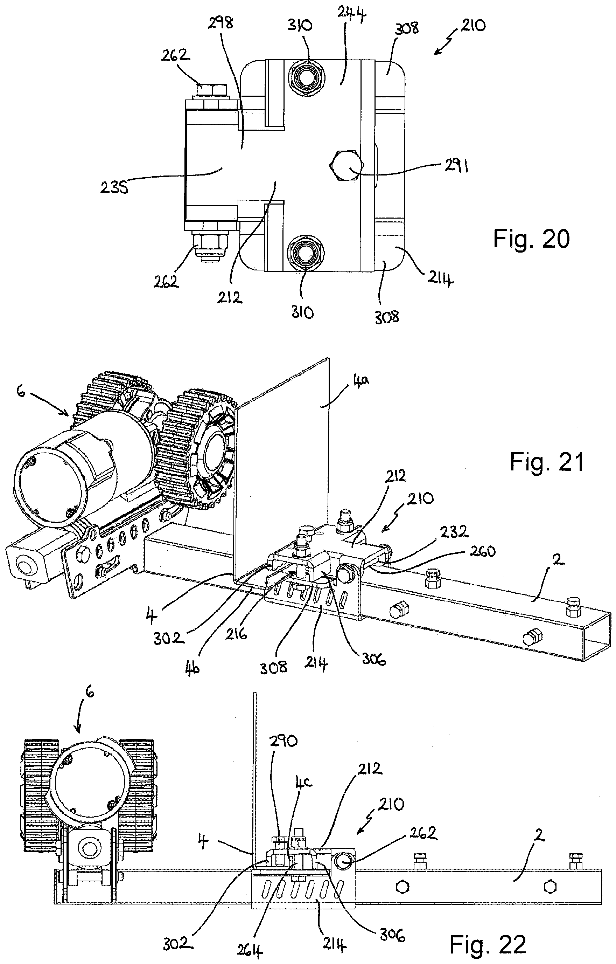

In the clamped configuration the jaw member 302 applies a force to a part of the structural member 4 to clamp that part of the structural member 4 between the jaw member 302 and the support arm 214. In the embodiment illustrated in Figures 21 and 22, a part of the structural member 4 is clamped between the clamping edge 304 of the jaw member 302 and a surface of the flanges 308 of the support arm 214. In particular, in this embodiment the base panel 4b of the structural member 4 is clamped between the jaw member 302 and a part of the flanges 308 of the support arm 214 proximate the second end 226 of the support arm 214.

Additionally, with the clamping device 210 in the clamped configuration the retaining members 306 of the securing arm 212 are brought into contact with a part of the cross member 2 seated in the channel member 246. The cross member 2 is therefore clamped and securely held within the channel member 246. It will be appreciated that the force applied to the structural member 4 by the jaw member 302 may also bring a part of the structural member 4 into contact with a part of the cross member 2. In this way the cross member 2 may additionally be clamped between the channel member 246 and the structural member 4 due to the force applied by the jaw member 302.

The first clamping mechanism 216 may therefore be actuated to clamp both the structural member 4 and the cross member 2 simultaneously.

To further secure the clamping device 210 to the structural member 4, to mitigate or prevent movement of the clamping device 210 over time, the second clamping mechanism 218 may be actuated to engage the clamping member 290 with the structural member 4. The clamping member 290 is preferably moveable from a first position (shown in Figures 11 to 16) to a second position (shown in Figures 17 to 22). In the first position the distal end 296 of the shank 292 is closer to a plane of the top plate 235 than the clamping edge 304 of the jaw member 302. In the second position the distal end 296 of the shank 292 is in contact with a part of the structural member 4 clamped between the jaw member 302 and the support arm 214. The clamping member 290 may therefore be moved into the second position to apply an additional force to the structural member 4. In preferred embodiments the distal end 296 of the clamping member 290 is pointed or sharpened so that the distal end 296 is able to dig into or penetrate a part of the structural member.

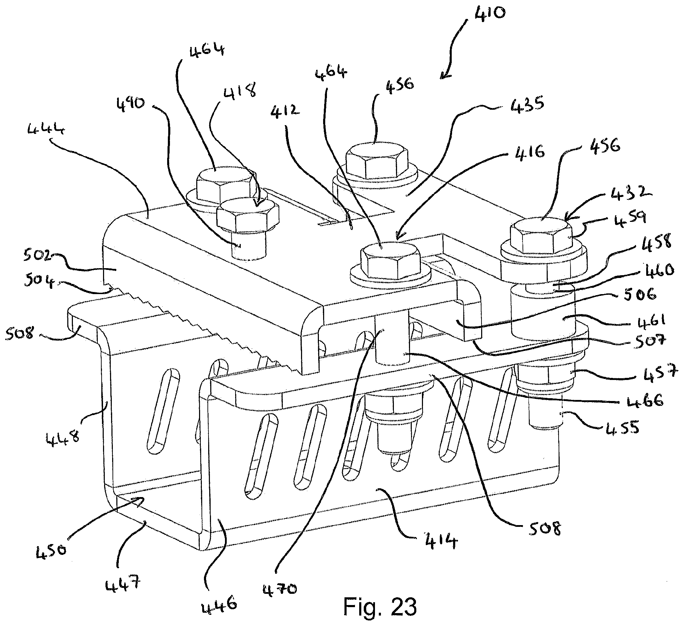

In some embodiments of the invention, the jaw portion of the securing arm and, if present, the jaw portion of the support arm may not be at or adjacent the second end of the device. A fourth embodiment of a clamping device 410 according to the present invention is shown in Figures 23 to 27.

As described above in relation to the other embodiments, the clamping device 410 comprises a securing arm 412, a support arm 414, and a first clamping mechanism 416. In this embodiment the first end 420 of the securing arm 412 is again substantially aligned with the first end 424 of the support arm 414 at a first end 428 of the clamping device 410. A second end 430 of the clamping device 410 is defined by the second end 426 of the support arm 414.

In this embodiment a length of the securing arm 412, between first and second ends 420, 422, is smaller than a length of the support arm 414 between first and second ends 424, 426.

The securing arm 412 is connected to the support arm 414 by an articulating mechanism 432 which prevents pivoting movement as described in the previous embodiments. In this arrangement, the articulating mechanism 432 is arranged such that the securing arm 412 can move relatively towards the support arm 414. In this embodiment the articulating mechanism 432 is disposed proximate the first end 428 of the clamping device 410.

As above, in this example the top plate 435 is substantially T-shaped. The jaw member 502 terminates at a clamping edge 504 and in the preferred embodiments the jaw member 502 has an undulating or serrated clamping edge 504.

A pair of retaining members 506 extend from the top plate 435 in a direction substantially perpendicular to a plane of the top plate 435. A depth or height of each of the retaining members 506 (i.e. a distance between the top plate 435 and a free edge 507 of the retaining member 506 in a direction substantially perpendicular to the plane of the top plate 435) may either be the same or may be greater than a depth or height of the jaw member 502 (i.e. a distance between the top plate 435 and the clamping edge 504 of the jaw member 502 in a direction substantially perpendicular to the plane of the top plate 435).

The articulating mechanism 432 comprise movement means to enable the securing arm 412 (specifically the top plate 435) to move linearly and/or translationally towards and away from the support arm 414. Specifically, the articulating mechanism comprises two shafts 460 which together with the shafts 470 of the clamping bolts 466 of the first clamping mechanism 416 guide and restrict the movement in a translational direction. Accordingly, the clamping edge 504 of the jaw member 502 and the free edge(s) 507 of the retaining member 506 mutually and simultaneously move directly towards respective opposing surfaces provided by the support arm 414. The provides a sandwich clamping effect rather than a pivoting clamping effect.

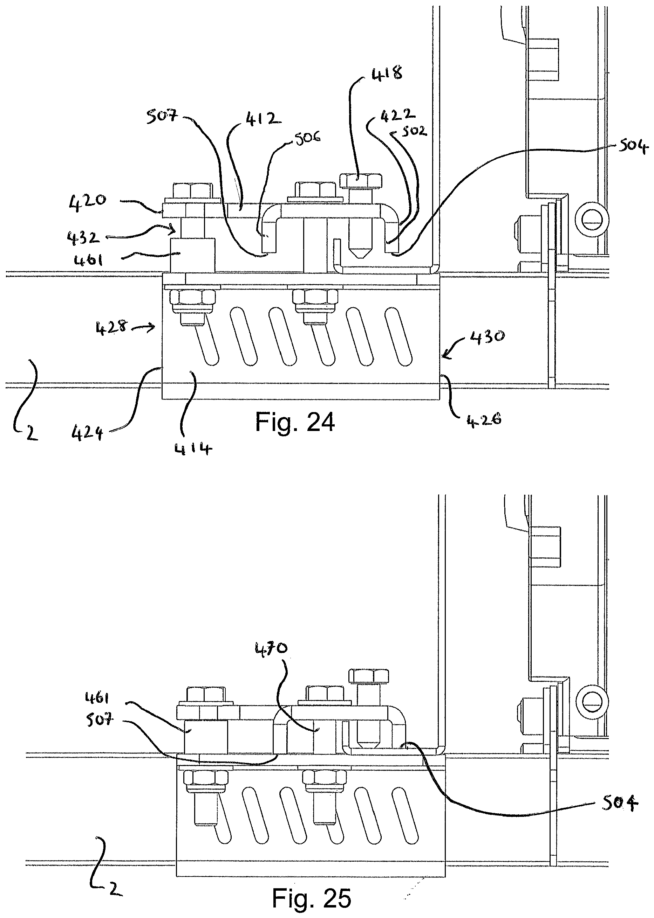

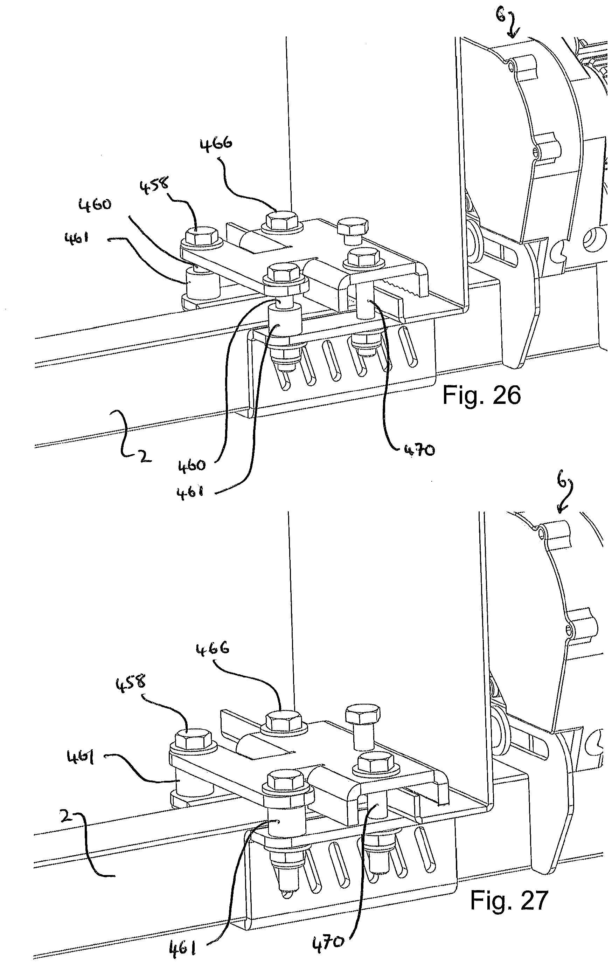

The first clamping mechanism 416 is arranged to translationally move the securing arm 412 and the support arm 414 along the shafts of the articulating mechanism 432 such that the jaw portion 444, and in particular the jaw member 502, of the securing arm 412 moves towards the support arm 414 into a clamped configuration or away from the support arm 414 into an open configuration. The clamped configuration is shown in Figure 25 and Figure 27 and the open configuration is shown in Figure 24 and Figure 26. The first clamping mechanism 416 is disposed between the first and second ends 428, 430 of the clamping device 410. In particular, the first clamping mechanism 416 is disposed between the articulating mechanism 432 and the jaw member 502.

The first clamping mechanism is essentially the same as described above in relation to at least the third embodiment albeit the movement produced is translational rather than pivotal.

The articulating mechanism 432 includes a pair of actuating members 456. Each actuating member 456 comprises a clamping bolt 458. First and second clamping bolts 458 are mounted on opposite first and second sides of the clamping device 410. Each clamping bolt 458 comprises a head 459 and a shank 460 or shaft. Each clamping bolt 458 is engaged with both a part of the support arm 414 and a part of the securing arm 412. The length of each bolt 458 is such that the shank 460 extends between the support arm 414 and the securing arm 412 in both the clamped and open configurations. In this embodiment each shank 460 passes through a respective first hole in a part of the support arm 414 and a respective second hole in the securing arm 412.

The support arm 414 comprises a flange 508 that extends outwardly from an edge of each of the side walls 448 of the channel member 446 furthest from the bottom plate 447. Each one of a pair of first holes is provided in a respective one of the flanges 508. Each of the holes is sized such that there is clearance between the shank 460 and the hole.

The clamping bolts 458 are engaged with the securing arm 412 and support arm 414 such that a threaded nut 457 for each of the clamping bolts 458 is located on an underside of the flange 508 furthest from the securing arm 412. At least a distal end region 455 of each shank 460 is externally threaded and engages with the threaded nut 457. A head 456 of the clamping bolt 458 locates on an upper surface of the securing arm 412 furthest from the support arm 414. In this way a part of the support arm 414 and a part of the securing arm 412 are located between the head 459 of the clamping bolt 458 and the threaded nut 457.

The articulating mechanism comprises a spacer means to space the securing arm 412 from the support arm 414. The spacer means comprise a spacer element 461 in the form of a metal collar element or metal spacer 461. Two spacer elements 461 are provided with each being mounted on respective shafts 460 of the two clamping bolts 458. The spacer elements 461 sets the height in the clamped/closed configuration and maintains parallelism.

In use, rotation of the clamping bolts 458 in a first direction causes the threaded nut 457 to move along the threaded region 455 towards the head 459 of the bolt 458 such that the jaw portion 444 of the securing arm 412 (and the whole/entire securing arm 412) moves in a direction towards the support arm 414 into the clamped configuration. Similarly, rotation of the clamping bolts 458 in a second, opposite direction, causes the threaded nut 457 to move along the threaded region 455 away from the head 459 of the bolt 458 such that the jaw portion 444 of the securing arm 212 (and the whole/entire securing arm 412) is able to move in a direction away from the support arm 414 into the open configuration. Washers are provided to facilitate the rotational actuating movement.

When the clamping device 410 is moved between the clamped and open configurations, the securing arm 412 and the support arm 414 are maintained in a (substantially) parallel configuration/orientation.

It will be appreciated that movement of the jaw portion 444 of the securing arm 412 in a direction towards the support arm 414 moves both the jaw member 502 and the retaining members 506 in directions towards the support arm 514. When the clamping device 410 is in the clamped configuration the free edge 507 of each of the retaining members 506 preferably contacts or abuts a surface of a corresponding one of the flanges 508. Alternatively or additionally, the free edge(s) 507 of the retaining member(s) 506 may directly abut and contact an upper surface of the cross member 2.

It is envisaged that this clamping device 410 will be used to support a cross member 2 on the underside of a part of a chassis. In particular, the cross member 2 may be used to support one or more caravan movers 6 on the underside of a caravan chassis proximate the wheels of the caravan.

As described above, the clamping device 410 further comprises a second clamping mechanism 418. The second clamping mechanism 418 includes a clamping member 490.

In use, the clamping device 410 is oriented with the securing arm 412 disposed above the support arm 414. With the clamping device 410 in the open configuration, a cross member 2 may be located within the channel 450 of the support arm 414, such that the cross member 2 is supported by the support arm 414. The clamping device 410 is retained on the cross member 2 by the channel member 446 of the support arm 414 and the retaining members 506 which together substantially surround a part of the cross member 2 and prevent the cross member 2 being withdrawn from the channel 450. Movement or sliding of the clamping device 410 along the cross member 2 is permitted to allow the position of the clamping device 410 on the cross member 2 to be adjusted.

The jaw member 502 of the securing arm 412 may then be engaged with a structural member 4, such as a part of a chassis of a caravan. In preferred embodiments the projecting jaw member 502 of the securing arm 412 is hooked over a part of the structural member 4 such that the clamping device 410 may be suspended from the structural member 4 whilst in the open configuration. The position of the clamping device 410 is described in more detail above.

Once the cross member 2 has been correctly positioned, the clamping device 410 may then be clamped to both the cross member 2 and the structural member 4.

To secure the clamping device 410, a user operates the actuating members 464 of the first clamping mechanism 416. In particular, the user rotates each of the clamping bolts 466 in the first direction to move the securing arm 412 with respect to the support arm 414, bringing the jaw portion 444 of the securing arm 412 towards the support arm 414. In addition, the user rotates each of the clamping bolts 458 in the first direction to move the securing arm 412 with respect to the support arm 414, bringing the jaw portion 444 of the securing arm 412 towards the support arm 414. The two sets of clamping bolts 458, 466 can be intermittently operated and adjusted in turn or in a sequence. Alternatively, a first set of clamping bolts 458, 466 can be operated and then the remaining set of clamping bolts 458, 466 can be operated.

In the clamped configuration the jaw member 502 applies a force to a part of the structural member 4 to clamp that part of the structural member 4 between the jaw member 502 and the support arm 414. Again, this is described in more detail with reference to the earlier embodiments. Similarly, the retaining member 506 may apply a force to the cross member 2 to secure/mount the clamping device 410 and to grip/clamp the cross member 2 between the retaining member 506 and the support arm 414.

To further secure the clamping device 410 to the structural member 4, to mitigate or prevent movement of the clamping device 410 over time, the second clamping mechanism 418 may be actuated to engage the clamping member 490 with the structural member 4. Again, this is described in more detail with reference to the other preferred embodiments.

Overall, in the fourth embodiment, the securing arm 412 is connected by an articulating mechanism providing translational movement relative to the support arm 414. In the earlier described embodiments, the securing arm is connected by an articulating mechanism in the form of a pivot to the support arm, such that the securing arm can pivot with respect to the support arm. The securing arm includes a jaw portion. The first clamping mechanism is arranged to move the securing arm with respect to the support arm about the pivot (or along the linear shafts), such that, in use, a part of the structural member is clamped between a part of the jaw portion of the securing arm and the support arm. The retaining member is arranged to clamp the cross member to the support arm.

The present invention provides a dual clamping force, one on the chassis and a second on the cross bar. Both of these are integral to the clamp and specifically the top of the clamp. This not only applies the required clamping force but also helps to stabilise the cross bar and prevents flexing under load. A device providing a single clamping force would be less secure. The present invention provides a two-piece design. Excluding the fixing bolts, the clamp consists of just a top and bottom clamp made of single sheets of folded steel. No additional cast parts or welded parts are required. This reduces the weight and size without compromising function. A device formed from solid cast blocks would be generally bulkier, heavier and more costly to manufacture. Furthermore, a device incorporating three or more components (for example, a top clamp, bottom clamp and a separate loose cast clamping block) would result in a design which is more complex, weighs more and is less easy to fit. Disclosed is also a pointed pinch bolt incorporated into the top clamp to give additional grip on the chassis to prevent slippage.

It will be appreciated that further variations and modifications not explicitly described above are also possible, without departing from the scope of the invention as defined in the appended claims.

## Claims

1. A clamping device (10, 210) for securing a cross member (2) to a structural member (4), the device (210) comprising:
- a support arm (214) comprising a channel (250) for receiving said cross member (2);
- a securing arm (212) including a jaw portion (244), the securing arm (212) being connected to the support arm (214) by an articulating mechanism
- a first clamping mechanism (216) arranged to apply a force to clamp at least a part of said structural member (4) between said jaw portion (244) and the support arm (214), wherein the first clamping mechanism (216) is configured to move the support arm (214) and securing arm (212) between an open configuration, in which said cross member (2) may be engaged with the support arm (214) to be supported by the support arm (214), and a clamped configuration, in which the jaw portion (244) applies a clamping force to clamp at least a part of said structural member (4) between said jaw portion (244) and the support arm (214); and
- a retaining member (306) arranged to apply a force to clamp said cross member (2) to the support arm (214), and **characterised in that**
the first clamping mechanism (216) and the jaw portion (244) are provided on the same side of the articulating mechanism and the first clamping mechanism (216) is disposed between a part of the jaw portion (244) and the articulating mechanism, and
the retaining member (306) is arranged to abut a first surface of the cross member (2) in order to apply a clamping force to said cross member (2) when the support arm (214) and securing arm (212) are in the clamped configuration.

2. A clamping device (10, 210) according to Claim 1 in which the articulating mechanism comprises a pivot (232).

3. A clamping device (10, 210) as claimed in any preceding claim, wherein the first clamping mechanism (216) is connected to the retaining member (306) such that the first clamping mechanism (216) is configured to simultaneously apply a force to clamp at least a part of said structural member (4) between said jaw portion (244) and the support arm (214) and to move the retaining member (306) to apply a force to clamp said cross member (2) to the support arm (214).

4. A clamping device (10, 210) as claimed in any preceding claim, wherein the retaining member (306) projects from the jaw portion (244), and wherein the jaw portion (244) further comprises a jaw member (302), the first clamping mechanism (216) being arranged to apply a force to clamp at least a part of said structural member (4) between the jaw member (302) and the support arm (214).

5. A clamping device (10, 210) as claimed in any one of Claims 1 or Claim 2, further comprising a second clamping mechanism (18, 218), the second clamping mechanism (18, 218) being independent of the first clamping mechanism (16, 216) and being arranged to move the retaining member (82, 306) to apply said force to said cross member (2).

6. A clamping device (10, 210) as claimed in any one of Claims 1 or Claim 2, further comprising a second clamping mechanism (218), the second clamping mechanism (218) being independent of the first clamping mechanism (216) and being arranged to apply an additional force to said structural member (4) and wherein the second clamping mechanism (218) comprises a clamping member (290) configured to indent a part of the structural member (4).

7. A clamping device (10, 210) as claimed in any preceding claim, in which the support arm (214) can abut a second opposite surface of the cross member (2).

8. A clamping device (10, 210) as claimed in any preceding claim, wherein the articulating mechanism is disposed proximate a first end (224) of the support arm (214) and a first end (220) of the securing arm (212) and wherein the jaw portion (244) is disposed at a second end (222) of the securing arm (212).

9. A clamping device (10, 210) as claimed in any preceding claim, wherein the first clamping mechanism (216) comprises a bolt (266) engaged with the support arm (214) and the securing arm (212) and wherein the bolt (266) extends through a part of the support arm (214) and engages with a threaded hole in the securing arm (212) or a threaded nut (310) connected to the securing arm (212).

10. A clamping device (10, 210) as claimed in Claim 9, wherein the second clamping mechanism (18, 218) comprises a clamping plate (82) and a pair of actuating members (88) is configured to apply a force to ends of the clamping plate (82).

11. An assembly comprising a clamping device (10, 210), a cross member (2), and a structural member (4), wherein the clamping device (10, 210) is in accordance with any one of Claim 1 to Claim 10.

12. An assembly as claimed in Claim 11, wherein the support arm (214) comprises a channel (250) in which a part of the cross member (2) is located and wherein the support arm (214) is elongate and the channel (250) extends parallel to an axis of the support arm (214).

13. A method of securing a cross member (2) to a structural member (4) using a clamping device (10, 210) as claimed in any one of Claims 1 to 10, the method comprising:
- supporting the cross member (2) with the support arm (214);
- operating the first clamping mechanism (216) to clamp the structural member (4) between the jaw portion (244) and the support arm (214); and **characterised by**
- moving the retaining member (306) to clamp the cross member (2) to the support arm (214).

## Patentansprüche

1. Klemmvorrichtung (10, 210) zum Sichern einer Querstrebe (2) an einem Strukturteil (4), wobei die Vorrichtung (210) folgendes umfasst:
- einen Stützschenkel (214), der einen Kanal (250) zur Aufnahme der Querstrebe (2) umfasst;
- einen Sicherungsschenkel (212), der einen Klemmabschnitt (244) aufweist, wobei der Sicherungsschenkel (212) durch einen Gelenksmechanismus an dem Stützschenkel (214) angebunden ist,
- einen ersten Klemmmechanismus (216), der so angeordnet ist, dass er eine Kraft ausüben kann, um wenigstens ein Teil des Strukturteils (4) zwischen dem Klemmabschnitt (244) und dem Stützschenkel (214) einzuklemmen, wobei der erste Klemmmechanismus (216) so eingerichtet ist, dass er den Stützschenkel (214) und den Sicherungsschenkel (212) zwischen einer offenen Konfiguration, in welcher die Querstrebe (2) mit dem Stützschenkel (214) in Eingriff gebracht werden kann, um vom Stützschenkel (214) gestützt zu werden, und einer Klemmkonfiguration bewegen kann, in welcher der Klemmabschnitt (244) eine Klemmkraft ausübt, um wenigstens ein Teil des Strukturteils (4) zwischen dem Klemmabschnitt (244) und dem Stützschenkel (214) einzuklemmen; und
- ein Halteelement (306), welches so angeordnet ist, dass es eine Kraft ausüben kann, um die Querstrebe (2) gegen den Stützschenkel (214) zu klemmen, und
**dadurch gekennzeichnet,**
**dass** der erste Klemmmechanismus (216) und der Klemmabschnitt (244) auf derselben Seite des Gelenksmechanismus angeordnet sind, und der erste Klemmmechanismus (216) zwischen einem Teil des Klemmabschnitts (244) und dem Gelenksmechanismus angeordnet ist, und
wobei das Halteelement (306) so angeordnet ist, dass es gegen eine erste Fläche der Querstrebe (2) anliegt, um eine Klemmkraft auf die Querstrebe (2) auszuüben, wenn der Stützschenkel (214) und der Sicherungsschenkel (212) sich in der Klemmkonfiguration befinden.

2. Klemmvorrichtung (10, 210) nach Anspruch 1,
bei welcher der Gelenksmechanismus ein Gelenk (232) umfasst.

3. Klemmvorrichtung (10, 210) nach einem der vorigen Ansprüche,
bei welcher der erste Klemmmechanismus (216) mit dem Halteelement (306) derart verbunden ist, dass der erste Klemmmechanismus (216) so eingerichtet ist, dass er gleichzeitig eine Kraft ausüben kann, um wenigstens einen Teil des Strukturteils (4) zwischen dem Klemmabschnitt (244) und dem Stützschenkel (214) einzuklemmen und das Halteelement (306) zu bewegen, um eine Kraft ausüben, die die Querstrebe (2) gegen den Stützschenkel (214) klemmt.

4. Klemmvorrichtung (10, 210) nach einem der vorigen Ansprüche,
bei welcher das Halteelement (306) gegenüber dem Klemmabschnitt (244) hervorsteht, und wobei der Klemmabschnitt (244) weiter ein Klemmelement (302) umfasst, wobei der erste Klemmmechanismus (216) so angeordnet ist, dass er eine Kraft ausüben kann, um wenigstens ein Teil des Strukturteils (4) zwischen dem Klemmelement (302) und dem Stützschenkel (214) einzuklemmen.

5. Klemmvorrichtung (10, 210) nach einem der Ansprüche 1 oder 2,
weiter umfassend einen zweiten Klemmmechanismus (18, 218), wobei der zweite Klemmmechanismus (18, 218) unabhängig von dem ersten Klemmmechanismus (16, 216) und so angeordnet ist, dass er das Halteelement (82, 306) bewegen kann, um die Kraft auf die Querstrebe (2) auszuüben.

6. Klemmvorrichtung (10, 210) nach einem der Ansprüche 1 oder 2,
weiter umfassend einen zweiten Klemmmechanismus (218), wobei der zweite Klemmmechanismus (218) unabhängig von dem ersten Klemmmechanismus (216) und so angeordnet ist, dass er eine zusätzliche Kraft auf das Strukturteil (4) ausüben kann, und wobei der zweite Klemmmechanismus (218) ein Klemmteil (290) aufweist, welches dazu eingerichtet ist, einen Teil des Strukturteils (4) einzudrücken.

7. Klemmvorrichtung (10, 210) nach einem der vorigen Ansprüche,
bei welcher der Stützschenkel (214) gegen eine zweite gegenüberliegende Fläche der Querstrebe (2) anliegen kann.

8. Klemmvorrichtung (10, 210) nach einem der vorigen Ansprüche,
bei welcher der Gelenkmechanismus benachbart zu einem ersten Ende (224) des Stützschenkels (214) und einem ersten Ende (220) des Sicherungsschenkels (212) angeordnet ist, und wobei der Klemmabschnitt (244) an einem zweiten Ende (222) des Sicherungsschenkels (212) angeordnet ist.

9. Klemmvorrichtung (10, 210) nach einem der vorigen Ansprüche,
bei welcher der erste Klemmmechanismus (216) einen Bolzen (266) umfasst, der mit dem Stützschenkel (214) und dem Sicherungsschenkel (212) in Eingriff gebracht ist, und wobei der Bolzen (266) sich durch einen Teil des Stützschenkels (214) hindurch erstreckt und mit einem Gewindeloch in dem Sicherungsschenkel (212) oder einer mit dem Sicherungsschenkel (212) verbundenen Gewindemutter (310) im Eingriff steht.

10. Klemmvorrichtung (10, 210) nach Anspruch 9,
bei welcher der zweite Klemmmechanismus (18, 218) eine Klemmplatte (82) umfasst und ein Paar von Betätigungselementen (88) dazu eingerichtet ist, eine Kraft auf die Enden der Klemmplatte (82) auszuüben.

11. Anordnung, umfassend eine Klemmvorrichtung (10, 210), eine Querstrebe (2) und ein Strukturteil (4), wobei die Klemmvorrichtung (10, 210) nach einem der Ansprüche 1-10 ausgeführt ist.

12. Anordnung nach Anspruch 11,
bei welcher der Stützschenkel (214) einen Kanal (250) umfasst, in welchem sich ein Teil der Querstrebe (2) befindet, und wobei der Stützschenkel (214) eine längliche Gestalt aufweist und der Kanal (250) sich parallel zu einer Achse des Stützschenkels (214) erstreckt.

13. Verfahren zum Sichern einer Querstrebe (2) an einem Strukturteil (4), bei welchem eine Klemmvorrichtung (10, 210) nach einem der Ansprüche 1-10 verwendet wird, wobei das Verfahren folgendes umfasst:
- Abstützen einer Querstrebe (2) an dem Stützschenkel (214) ;
- Betätigen des ersten Klemmmechanismus (216), um das Strukturteil (4) zwischen dem Klemmabschnitt (244) und dem Stützschenkel (214) einzuklemmen; und **gekennzeichnet durch**
- Bewegen des Halteelements (306), um die Querstrebe (2) gegen den Stützschenkel (214) zu klemmen.

## Revendications

1. - Dispositif de serrage (10, 210) pour fixer une traverse (2) à un élément structurel (4), le dispositif (210) comprenant :
- un bras de support (214) comprenant un canal (250) pour recevoir ladite traverse (2) ;
- un bras de fixation (212) comprenant une partie mâchoire (244), le bras de fixation (212) étant relié au bras de support (214) par un mécanisme d'articulation ;
- un premier mécanisme de serrage (216) agencé pour appliquer une force de façon à serrer au moins une partie dudit élément structurel (4) entre ladite partie mâchoire (244) et le bras de support (214), le premier mécanisme de serrage (216) étant configuré pour déplacer le bras de support (214) et le bras de fixation (212) entre une configuration ouverte, dans laquelle ladite traverse (2) peut être engagée avec le bras de support (214) pour être supportée par le bras de support (214), et une configuration serrée, dans laquelle la partie mâchoire (244) applique une force de serrage pour serrer au moins une partie dudit élément structurel (4) entre ladite partie mâchoire (244) et le bras de support (214) ; et
- un élément de retenue (306) agencé pour appliquer une force de façon à serrer ladite traverse (2) au bras de support (214), et **caractérisé par le fait que**
le premier mécanisme de serrage (216) et la partie mâchoire (244) sont prévus du même côté du mécanisme d'articulation, et le premier mécanisme de serrage (216) est disposé entre une section de la partie mâchoire (244) et le mécanisme d'articulation, et
l'élément de retenue (306) est agencé pour venir en butée contre une première surface de la traverse (2) afin d'appliquer une force de serrage à ladite traverse (2) lorsque le bras de support (214) et le bras de fixation (212) sont dans la configuration serrée.

2. - Dispositif de serrage (10, 210) selon la revendication 1, dans lequel le mécanisme d'articulation comprend un pivot (232).

3. - Dispositif de serrage (10, 210) selon l'une quelconque des revendications précédentes, dans lequel le premier mécanisme de serrage (216) est relié à l'élément de retenue (306) de telle sorte que le premier mécanisme de serrage (216) est configuré pour appliquer simultanément une force pour serrer au moins une partie dudit élément structurel (4) entre ladite partie mâchoire (244) et le bras de support (214) et pour déplacer l'élément de retenue (306) de façon à appliquer une force pour serrer ladite traverse (2) au bras de support (214).

4. - Dispositif de serrage (10, 210) selon l'une quelconque des revendications précédentes, dans lequel l'élément de retenue (306) fait saillie à partir de la partie mâchoire (244), et dans lequel la partie mâchoire (244) comprend en outre un élément de mâchoire (302), le premier mécanisme de serrage (216) étant agencé pour appliquer une force de façon à serrer au moins une partie dudit élément structurel (4) entre l'élément de mâchoire (302) et le bras de support (214).

5. - Dispositif de serrage (10, 210) selon l'une quelconque de la revendication 1 et de la revendication 2, comprenant en outre un second mécanisme de serrage (18, 218), le second mécanisme de serrage (18, 218) étant indépendant du premier mécanisme de serrage (16, 216) et étant agencé pour déplacer l'élément de retenue (82, 306) de façon à appliquer ladite force à ladite traverse (2).

6. - Dispositif de serrage (10, 210) selon l'une quelconque de la revendication 1 et de la revendication 2, comprenant en outre un second mécanisme de serrage (218), le second mécanisme de serrage (218) étant indépendant du premier mécanisme de serrage (216) et étant agencé pour appliquer une force supplémentaire audit élément structurel (4), et le second mécanisme de serrage (218) comprenant un élément de serrage (290) configuré pour s'enfoncer dans une partie de l'élément structurel (4).

7. - Dispositif de serrage (10,210) selon l'une quelconque des revendications précédentes, dans lequel le bras de support (214) peut venir en butée contre une seconde surface opposée de la traverse (2).

8. - Dispositif de serrage (10, 210) selon l'une quelconque des revendications précédentes, dans lequel le mécanisme d'articulation est disposé à proximité d'une première extrémité (224) du bras de support (214) et d'une première extrémité (220) du bras de fixation (212), et dans lequel la partie mâchoire (244) est disposée à une seconde extrémité (222) du bras de fixation (212).

9. - Dispositif de serrage (10, 210) selon l'une quelconque des revendications précédentes, dans lequel le premier mécanisme de serrage (216) comprend un boulon (266) engagé avec le bras de support (214) et le bras de fixation (212), et dans lequel le boulon (266) s'étend à travers une partie du bras de support (214) et s'engage avec un trou fileté dans le bras de fixation (212) ou un écrou fileté (310) relié au bras de fixation (212).

10. - Dispositif de serrage (10, 210) selon la revendication 9, dans lequel le second mécanisme de serrage (18, 218) comprend une plaque de serrage (82) et une paire d'éléments d'actionnement (88) est configurée pour appliquer une force à des extrémités de la plaque de serrage (82).

11. - Ensemble comprenant un dispositif de serrage (10, 210), une traverse (2) et un élément structurel (4), dans lequel le dispositif de serrage (10, 210) est selon l'une quelconque des revendications 1 à 10.

12. - Ensemble selon la revendication 11, dans lequel le bras de support (214) comprend un canal (250) dans lequel se situe une partie de la traverse (2), et dans lequel le bras de support (214) est allongé et le canal (250) s'étend parallèlement à un axe du bras de support (214) .

13. - Procédé de fixation d'une traverse (2) à un élément structurel (4) à l'aide d'un dispositif de serrage (10, 210) selon l'une quelconque des revendications 1 à 10, le procédé comprenant :
- supporter la traverse (2) avec le bras de support (214) ;
- actionner le premier mécanisme de serrage (216) pour serrer l'élément structurel (4) entre la partie mâchoire (244) et le bras de support (214) ; et **caractérisé par**
- déplacer l'élément de retenue (306) pour serrer la traverse (2) au bras de support (214).
